# EUROPEAN PATENT APPLICATION

(11) **EP 4 778 856 A1**
(43) Date of publication of application: **22.07.2026**
(21) Application number: 24864307.4
(22) Date of filing: 31.07.2024
(51) Int. Cl.: B65D 90/02, B65D 88/12, B65D 6/34, F16B 19/10

(54) **COMBINATION-TYPE CONTAINER**

(30) Priority: 15.09.2023 CN 202322525825 U; 12.12.2023 CN 202323396669 U
(71) Applicant: CIMC Containers (Group) Co., Ltd., Dongguan Guangdong 523808 (CN); China International Marine Containers (Group) Co., Ltd., Shenzhen, Guangdong 518067 (CN)
(72) Inventor: HU, Jinping, Dongguan, Guangdong 523808 (CN); WU, Suwen, Dongguan, Guangdong 523808 (CN); WANG, Chunming, Dongguan, Guangdong 523808 (CN); ZHANG, Jun, Dongguan, Guangdong 523808 (CN); WU, Liubo, Dongguan, Guangdong 523808 (CN)
(74) Representative: Gleiss Große Schrell und Partner mbB
(86) International application number: PCT/CN2024/109028
(87) International publication number: WO 2025/055584

(57) **Abstract**

A composite container (100), includes side panels (10), a top panel (20), a front panel (30), a container body frame (101), and at least one reinforcing rib (50). The container body frame (101) is made of steel material; at least a portion of the side panels (10), the top panel (20), and the front panel (30) is constituted by at least one composite material board (70), and the composite material board (70) is connected to the container body frame (101); the reinforcing rib (50) includes at least one connecting portion (50A) and a protruding portion (50B), the connecting portion (50A) is connected to the composite material board (70); the protruding portion (50B) extends from the connecting portion (50A) in a direction away from the composite material board (70). The composite container (100) is lightweight, has a low manufacturing cost, and is green and environmentally friendly, and the reinforcing rib (50) can ensure the structural strength and good water tightness of a container body.

## Description

### BACKGROUND

The present application relates to the technical field of containers, and in particular to a composite container.

The side panels, top panel and front panel of containers are less stressed and mainly play the role of shielding and sealing. Currently, the side panels, top panel and front panel of ordinary containers are all made of thin corrugated steel plates, which account for 40% to 50% of the total weight of the entire container. There are two main problems in the process of manufacturing the container: first, the processes of sandblasting and anti-corrosion coating of the thin corrugated steel plates involve not only a large workload but also sandblasting dust and noise, coating pollution, and poor working conditions; second, the welding between the thin corrugated steel plates as well as between the thin corrugated steel plates and the main components of the container is adopted, which involves a large amount of welding, and the welding smoke, harmful gases, noise, and radiation during the welding process, which will also have an adverse effect on both the environment and the health of personnel. When the thin corrugated steel plates are replaced with other materials, there may be a problem that the strength of the container body is not enough or the sealing performance is poor.

Therefore, there is a need for a composite container to at least partially solve the above problems.

### SUMMARY

A series of simplified concepts is introduced into the portion of Summary, which would be further illustrated in the portion of the detailed description. The Summary of the present invention does not mean attempting to define the key feature and essential technical feature of the claimed technical solution, let alone determining the protection scope thereof.

To at least partially solve the problem, the present application provides a composite container, comprising a side panel, a top panel, a front panel, a container body frame and at least one reinforcing rib, the container body frame is made of steel material; wherein at least a portion of the side panel, the top panel and the front panel is constituted by at least one composite material board, and the composite material board is connected to the container body frame; the reinforcing rib comprises at least one connecting portion and a protruding portion, wherein the connecting portion is connected to the composite material board; and the protruding portion extends from the connecting portion in a direction away from the composite material board.

According to another aspect of the present application, another composite container is provided, which includes a container body frame, a side panel, a top panel, a front panel and at least one reinforcing rib, the container body frame is made of steel material; the side panel is disposed on both sides of the container body frame; the top panel is disposed at the top end of the container body frame; the front panel is disposed at the front end of the container body frame; at least a portion of the side panel, the top panel and/or the front panel is constituted by at least one composite material board; the reinforcing rib is connected to the composite material board to reinforce the strength of the side panel, the top panel and/or the front panel constituted by the composite material board; wherein at least one of the composite material boards is directly connected to the container body frame.

According to the present application, at least a portion of the thin corrugated steel plates of the side panels, top panel and/or front panel of the container is replaced with lower-density composite material boards, so that the container has light weight, low manufacturing cost, and is green and environmentally friendly. By the use of the reinforcing ribs, the protruding portion of the reinforcing ribs can improve the structural strength, and the connecting portion is connected to the composite material board so that the reinforcing ribs and the composite material board form an integral body, which can ensure physical performance such as the structural strength and the rigidity of the container body on all panel surfaces.

### BRIEF DESCRIPTION OF THE DRAWINGS

The following drawings of the present application are hereby incorporated as part of the present application for the understanding of the present application. The embodiments of the present application are illustrated and described in the drawings in order to explain the principles of the present application.
Fig.1 is a perspective view of a composite container according to a first embodiment of the present application;
Fig. 2 is another perspective view of the container shown in Fig. 1, wherein composite material boards are removed;
Fig. 3 is a longitudinal cross-sectional perspective view of the container shown in Fig. 1;
Fig. 4 is a schematic structural view of a top panel including a composite material board and a metal plate;
Fig. 5 is a longitudinal cross-sectional view of a side panel and its connected structure shown in Fig. 1, wherein an area A is a non-joint area of the composite material board, and an area B is a joint area of the composite material board;
Fig. 6a is a partial enlarged view of the area A in Fig. 5;
Fig. 6b is a partial enlarged view of the area B in Fig. 5;
Fig. 7a is a longitudinal cross-sectional view of a top panel and its connected structure shown in Fig. 1, wherein an area C is the non-joint area of the composite material board, and area D is the joint area of the composite material board;
Fig. 7b is another longitudinal cross-sectional view of the top panel and its connected structure shown in Fig. 1, wherein the reinforcing ribs are bonded to the top panel;
Fig. 8 is a transverse cross-sectional view of the top panel and its connected structure shown in Fig. 1;
Fig. 9 is a transverse cross-sectional view of a side panel and its connected structure shown in Fig. 1 at a fixing member;
Fig. 10 is a longitudinal cross-sectional view of a front panel and its connected structure shown in Fig. 1;
Fig. 11a is a partial enlarged view of the area C in Fig. 7a;
Fig. 11b is a partial enlarged view of the area D in Fig. 7a;
Fig. 12a is a schematic view of a composite material board and a reinforcing rib with an L-shaped cross-section, wherein the reinforcing rib is located at the joint of the composite material boards;
Fig. 12b is another schematic view of a composite material board and a reinforcing rib with an L-shaped cross-section, wherein the reinforcing rib is located at the non-joint of the composite material board;
Fig. 13a is a schematic view of a composite material board and a reinforcing rib with a C-shaped cross-section, wherein the reinforcing rib is located at the joint of the composite material boards;
Fig. 13b is a schematic view of a composite material board and a reinforcing rib with a C-shaped cross-section, wherein the reinforcing rib is located at the non-joint of the composite material board;
Fig. 14a is a schematic view of a composite material board and a reinforcing rib with an H-shaped cross-section, wherein the reinforcing rib is located at the joint of the composite material boards;
Fig. 14b is a schematic view of a composite material board and a reinforcing rib with an H-shaped cross-section, wherein the reinforcing rib is located at the non-joint of the composite material board;
Fig. 15a is a schematic view of a composite material board and a reinforcing rib with a rectangular cross-section, wherein the reinforcing rib is located at the joint of the composite material boards;
Fig. 15b is a schematic view of a composite material board and a reinforcing rib with a rectangular cross-section, wherein the reinforcing rib is located at the non-joint of the composite material board;
Fig. 16a is a schematic view of a composite material board and a reinforcing rib with a Z-shaped cross-section, wherein the reinforcing rib is located at the joint of the composite material boards;
Fig. 16b is a schematic view of a composite material board and a reinforcing rib with a Z-shaped cross-section, wherein the reinforcing rib is located at the non-joint of the composite material board;
Fig. 17 is a schematic view of the composite material boards and the reinforcing rib, wherein two composite material boards are lapped with each other;
Fig. 18 is a partial cross-sectional view of the top panel and top side rails;
Fig. 19 is a partial cross-sectional view of the top panel and a front end header;
Fig. 20 is a partial cross-sectional view of the top panel and a rear end header;
Fig. 21 is a partial view of a top corner portion of a container;
Fig. 22a is a test diagram of equivalent stress of the side panel with four reinforcing ribs;
Fig. 22b is a test diagram of equivalent stress of the side panel with five reinforcing ribs;
Fig. 22c is a test diagram of equivalent stress of the side panel with six reinforcing ribs;
Fig. 22d is a test diagram of equivalent stress of the side panel with seven reinforcing ribs;
Fig. 22e is a test diagram of equivalent stress of the side panel with eight reinforcing ribs;
Fig. 23a is a test diagram of elastic deformation of the side panel with four reinforcing ribs;
Fig. 23b is a test diagram of elastic deformation of the side panel with five reinforcing ribs;
Fig. 23c is a test diagram of elastic deformation of the side panel with six reinforcing ribs;
Fig. 23d is a test diagram of elastic deformation of the side panel with seven reinforcing ribs;
Fig. 23e is a test diagram of elastic deformation of the side panel with eight reinforcing ribs;
Fig. 24a is a test diagram of equivalent stress of the front panel with one reinforcing rib;
Fig. 24b is a test diagram of equivalent stress of the front panel with two reinforcing ribs;
Fig. 24c is a test diagram of equivalent stress of the front panel with three reinforcing ribs;
Fig. 25a is a test diagram of elastic deformation of the front panel with one reinforcing rib;
Fig. 25b is a test diagram of elastic deformation of the front panel with two reinforcing ribs;
Fig. 25c is a test diagram of elastic deformation of the front panel with three reinforcing ribs;
Fig. 26a is a test diagram of equivalent stress of the top panel with five reinforcing ribs;
Fig. 26b is a test diagram of equivalent stress of the top panel with six reinforcing ribs;
Fig. 26c is a test diagram of equivalent stress of the top panel with seven reinforcing ribs;
Fig. 27a is a test diagram of elastic deformation of the top panel with five reinforcing ribs;
Fig. 27b is a test diagram of elastic deformation of the top panel with six reinforcing ribs;
Fig. 27c is a test diagram of elastic deformation of the top panel with seven reinforcing ribs;
Fig. 28 is a side view of the container shown in Fig. 1;
Fig. 29 is a top view of a bottom panel and underframe of the container shown in Fig. 1;
Fig. 30a is a cross-sectional view taken along line A-A in Fig. 29;
Fig. 30b is a cross-sectional view taken along line B-B in Fig. 29;
Fig. 31 is a schematic structural view of a rivet connected to a container body member and the composite material board according to the present application;
Fig. 32 is a schematic structural view of a rivet according to the present application;
Fig. 33 is a transverse cross-sectional view of a top panel and its connected structures according to the present application;
Fig. 34 is a transverse cross-sectional view of a side panel and its connected structure according to the present application;
Fig. 35 is a transverse cross-sectional view of a front panel and its connected structures according to the present application;
Fig. 36a is a cross-sectional view of the composite material board and an exemplary reinforcing rib;
Fig. 36b is a cross-sectional view of the composite material board and another exemplary reinforcing rib;
Fig. 36c is a cross-sectional view of the composite material board and still another exemplary reinforcing rib;
Fig. 37 is a cross-sectional view of a front end corner post and its connected structure;
Fig. 38 is a cross-sectional view of a rear end corner post and its connected structure;
Fig. 39 is a cross-sectional view of an exemplary top side rail and its connected structure;
Fig. 40 is a cross-sectional view of a front end header and its connected structure;
Fig. 41 is a cross-sectional view of yet another exemplary top side rail and its connected structure;
Fig. 42 is a perspective view of a composite container according to a second embodiment of the present application;
Fig. 43 is another perspective view of the container shown in Fig. 42, wherein the composite material boards are removed;
Fig. 44 is a longitudinal sectional perspective view of the container shown in Fig. 42;
Fig. 45 is a longitudinal cross-sectional view of a side panel and its connected structure shown in Fig. 42;
Fig. 46a is a partial enlarged view of an area E in Fig. 45;
Fig. 46b is a partial enlarged view of an area F in Fig. 45;
Fig. 47 is a longitudinal cross-sectional view of a top panel and its connected structure shown in Fig. 42;
Fig. 48 is a transverse cross-sectional view of a top panel, the side panel and their connected structures shown in Fig. 42;
Fig. 49 is a partial enlarged view of an area G in Fig. 47;
Fig. 50 is a longitudinal cross-sectional view of a door panel assembly and its connected structure shown in Fig. 42;
Fig. 51 is a side view of the container at the rear end shown in Fig. 42.

### DETAILED DESCRIPTION

In the following description, numerous specific details are set forth in order to provide a more thorough understanding of the present application. However, it is obvious to those skilled in this art that the embodiments of the present application may be implemented without one or more of these details. Some technical features well-known in this art are not described in other examples in order to avoid confusion with the present application.

In order to thoroughly understand the present application, a detailed description will be provided in the following description. It is to be understood that these embodiments are provided to make the disclosure thorough and complete and the concept of these exemplary embodiments be completely delivered to those of ordinary skill in the art. Obviously, the implementation of the embodiments of the present application is not limited to the specific details familiar to those skilled in the art. The preferred embodiments of the present application are illustrated in detail as below. However, the present application may further have other embodiments in addition to the detailed description.

It shall be noted that the terminology used herein is for the purpose of describing particular embodiments only and is not intended to limit the exemplary embodiments of the present application. As used herein, the singular forms are intended to include the plural forms as well, unless the context clearly indicates otherwise. It will be further understood that the terms "comprising" and/or "including," when used in this specification, specify the presence of stated features, wholes, steps, operations, elements, and/or components, but do not preclude the presence or addition of one or more other features, wholes, steps, operations, elements, components, and/or combinations thereof.

Ordinals such as "first" and "second" quoted in this application are merely identifiers and do not carry any other meaning, such as a specific order. Moreover, for example, the term "first component" itself does not imply the presence of "second component", and the term "second component" itself does not imply the presence of "first component."

It should be noted that the terms "up", "down", "front", "back", "left", "right", "inside", "outside" and similar expressions used herein are for illustrative purposes only and are not restrictive.

### First embodiment

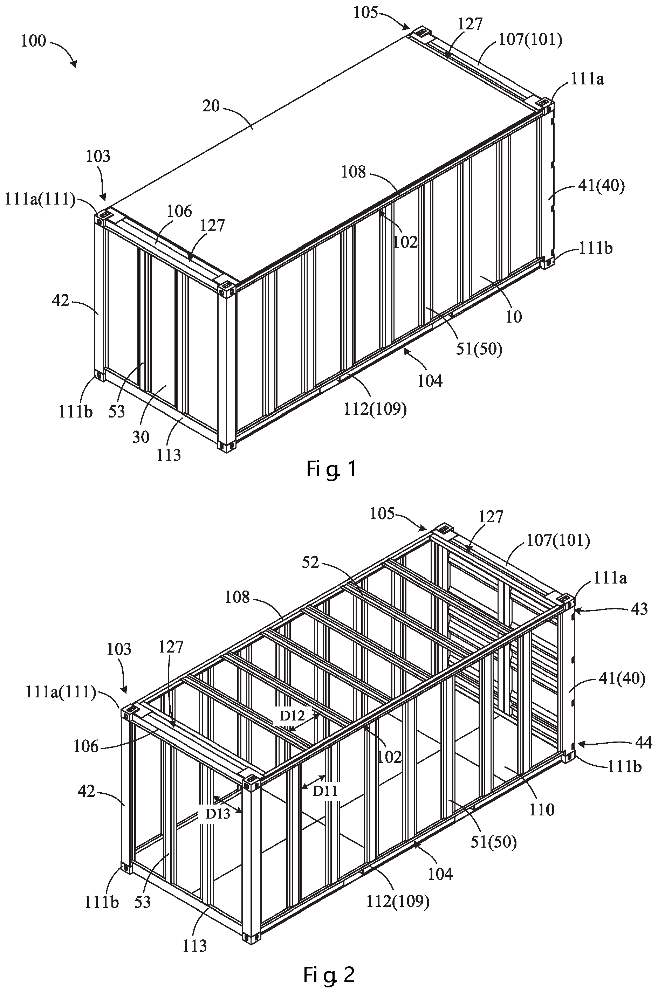

According to the first embodiment of the present application, a composite container 100 is provided. Referring to Figs. 1 to 3, the composite container 100 mainly includes a container body frame 101, side panels 10, a top panel 20, a front panel 30 and a bottom panel 110. The side panel 10 is disposed on both sides of the container body frame 101 in a width direction; the top panel 20 is disposed at the top end 102 of the container body frame 101; the front panel 30 is disposed at the front end 103 of the container body frame 101 in a length direction. The bottom panel 110 is disposed at the bottom end 104 of the container body frame 101. The container 100 may also include a container door 136. Optionally, as shown in Fig. 2, the container door 136 is disposed at the rear end 105 of the container body frame 101 in the length direction. In this case, the rear end 105 can also be referred to as a door end, and the container 100 is an end-opening container. Alternatively, the container door 136 is provided on one side of the container body frame 101 in the width direction, and further, the container door 136 is provided on the side where the side panel 10 is located, whereupon the container 100 is a side-opening container. Alternatively, the container door 136 may not be provided, the top panel 20 is provided with an openable and closable feeding structure, and the bottom panel 110 is provided with an openable and closable unloading structure.

The container body frame 101 has the shape of a rectangular prism and is made of steel material to ensure the overall structural strength of the container 100. The container body frame 101 mainly includes four corner posts 40, a front end header 106 (also referred as to a front top beam), a rear end header 107, a pair of top side rails 108 (also referred to as side top beams) and an underframe 109. For the end-opening container 100, the rear end header 107 can also be referred to as a door top beam. The front end header 106 is located at the front end 103 of the container body frame 101, and the rear end header 107 is located at the rear end 105 of the container body frame 101. The four corner posts 40 are respectively located at the four corners of the container body frame 101, and the two top side rails 108 are respectively located on both sides of the container body frame 101. The underframe 109 is located at the bottom end 104 of the container body frame 101. The corner posts 40 are connected to adjacent parts through corner pieces 111.

The four corner posts 40 include a pair of rear end corner posts 41 at the rear end 105 of the container body frame 101 and a pair of front end corner posts 42 at the front end 103 of the container body frame 101. For the end-opening container 100, the rear end corner posts 41 are also called door-end corner posts. The rear end corner posts 41 are disposed in parallel with the front end corner posts 42. The two ends of the front end header 106 are respectively connected to the upper ends 43 of the pair of front end corner posts 42. The two ends of the top side rail 108 are respectively connected to the respective upper ends 43 of the front end corner posts 42 and the rear end corner posts 41 located on the same side. The four corners of the underframe 109 are respectively connected to the lower ends 44 of the four corner posts 40, that is, the four corners of the underframe 109 are respectively connected to the lower ends 44 of the pair of rear end corner posts 41 and the pair of front end corner posts 42. The bottom panel 110 is disposed on the underframe 109, and the bottom panel 110 can be constituted by a steel plate, a wooden board, a bamboo-wood composite board and/or a plastic board.

Specifically, the four corner posts 40 are connected to the underframe 109 through the corner pieces 111 and the four corner posts 40 are connected to the top side rails 108 through the corner pieces 111. The front end corner post 42 is connected to the front end header 106 through the corner pieces 111, and the rear end corner post 41 is connected to the rear end header 107 through the corner pieces 111. The underframe 109 includes two bottom side rails 112, a front end sill 113 and a rear end sill 114, and a plurality of bottom crossbeams 115 connecting the two bottom side rails 112. The bottom panel 110 may be connected to the bottom side rails 112, the front end sill 113, the rear end sill 114 and the bottom crossbeam 115 through fasteners 60 such as screws.

The composite container 100 according to the present application may be a 20-foot container, a 40-foot container, a 40-foot high-cube container, a 45-foot high-cube container or a railway wide-body container, etc. The size of the container 100 is not specifically limited herein.

The container 100 further includes at least one composite material board 70 and at least one reinforcing rib 50. The composite material board 70 is connected to the container body frame 101 and constitutes at least a portion of the side panels 10, the top panel 20 and/or the front panel 30. The reinforcing rib 50 is connected to the composite material board 70 to strengthen the strength of the side panel 10, the top panel 20 and/or the front panel 30 constituted by the composite material board 70. The composite material board 70 may be a flat plate. Exemplarily, at least a portion of the side panel 10, the top panel 20 and the front panel 30 is made of the composite material board 70. In the illustrated embodiment, the entire side panels 10, the entire top panel 20 and the entire front panel 30 are made of the composite material board 70. Alternatively, the entire side panels 10, most of the top panel 20 and the entire front panels 30 are made of the composite material board 70.

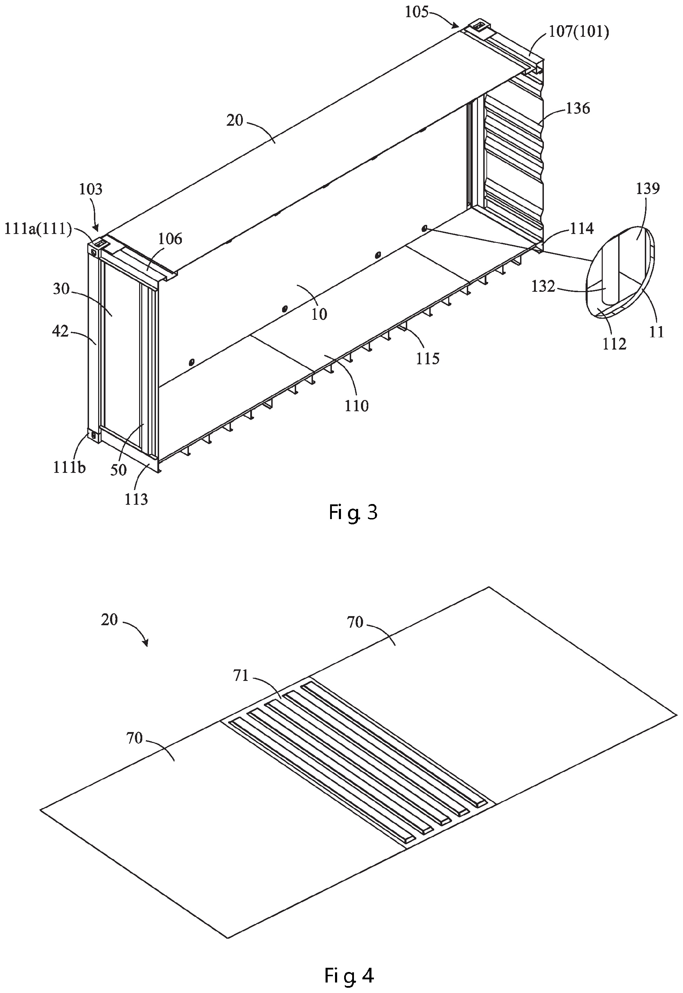

If necessary and/or desired, at least a portion of the top panel 20 is constituted by the composite material board 70, while the side panel 10 and the front panel 30 are constituted by other material boards. Alternatively, at least a portion of the side panel 10 is constituted by the composite material board 70, while the top panel 20 and the front panel 30 are constituted by other material boards. Alternatively, the front panel 30 is constituted by the composite material board 70, while the top panel 20 and the side panel 10 are constituted by other material boards. The other material boards are metal plates, such as corrugated plates. Exemplarily, as shown in Fig. 4, the top panel 20 includes the composite material board 70 and a metal plate 71. The metal plate 71 is connected to the composite material board 70 through the reinforcing ribs 50. Alternatively, the metal plate 71 laps with the composite material board 70, and the lapping portion is connected by fasteners 60 or structural adhesives. The composite material board endows the top panel with advantages of light weight, high strength, good wear resistance, etc., while the metal plate endows the top panel with high rigidity and can also effectively reduce the production cost of the top panel.

Optionally, the entire side panels 10 are constituted by at least two composite material boards 70; alternatively, the entire side panels 10 are constituted by one composite material board 70. The entire top panel 20 is constituted by at least two composite material boards 70; alternatively, the entire top panel 20 is constituted by one composite material board 70. The front panel 30 is constituted by at least two composite material boards 70; alternatively, the entire front panel 30 is constituted by one composite material board 70. This further improves the wear resistance, corrosion resistance and impact resistance of the container at the container surface, and effectively reduces the maintenance cost of the container over its lifecycle.

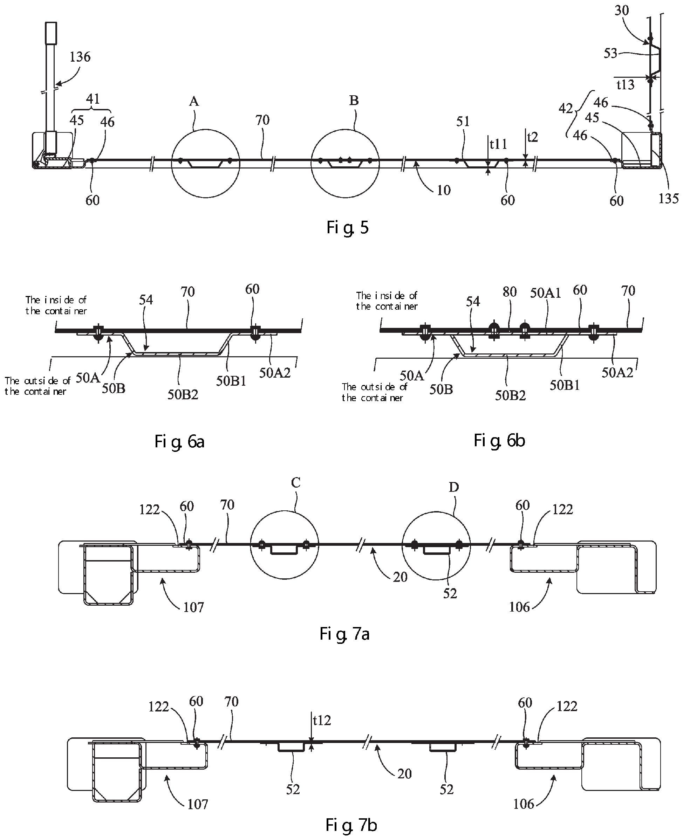

The position of the reinforcing rib 50 on the composite material board 70 is related to the desired strength of the side panels 10, the top panel 20 or the front panel 30. The reinforcing rib 50 may be provided at the joint of two adjacent composite material boards 70, or at the non-joint of a single composite material board. Exemplarily, referring to Fig. 5, at least one of the side panels 10, the top panel 20 and the front panel 30 includes at least two jointed composite material boards 70. As shown in Fig. 6a, a single composite material board 70 is independently provided with at least one reinforcing rib 50, so that the composite material board 70 is strengthened at the non-joint. The reinforcing rib is provided at the non-joint of the composite material board, and the position of the reinforcing rib is disposed based on the desired physical properties of the container surface and is not limited to the size of the single composite material board.

As shown in Fig. 6b, two adjacent composite material boards 70 are close to each other with no other components between them. Further, the reinforcing rib 50 is integrally located on one side of the composite material board 70. The two adjacent composite material boards 70 are connected by the reinforcing rib 50, so that the composite material boards 70 are connected and reinforced at the joint. There is a small installation gap between the two jointed composite material boards, and a seal can be easily formed at the joint to improve the sealing. For the solution in which the reinforcing rib is on the outer side of the composite material board, the inner surface of the container body is formed only by the composite material board at the joint. At the joint, no other components contact the goods in the container body, but the composite material board contacts the goods, which can make full use of the wear resistance of the composite material.

As shown in Figs. 6a and 6b, the reinforcing rib 50 includes a connecting portion 50A and a protruding portion 50B, wherein the connecting portion 50A is connected to the composite material board 70, and the protruding portion 50B extends from the connecting portion 50A in a direction away from the composite material board 70. Thus, a plurality of composite material boards 70 may be jointed together by the reinforcing rib 50, and at the joint of the composite material boards 70, the reinforcing rib 50 can ensure the water tightness and structural strength of the composite container 100.

According to the composite container 100 of the present application, the weight of the container 100 can be reduced, which is conducive to achieving lightweight of the composite container 100; the structural strength, rigidity and water tightness of the container 100 are ensured; and the workload of welding, sandblasting and anti-corrosion spraying can be greatly reduced and the coating area can be reduced during the manufacturing process of the composite container 100, which not only simplifies the process flow and shortens the production cycle, but also avoids the adverse effects of welding smoke and welding slag on human health and the environment, while keeping the recycling cost low. The composite container 100 of the present application has the advantages of being green and low-carbon, lightweight and environmentally friendly, reliability, durability and the like.

The arrangement of the composite material board 70 and the reinforcing ribs 50 on the container body frame 101 will be described below in conjunction with Figs. 5 and 7a to 10.

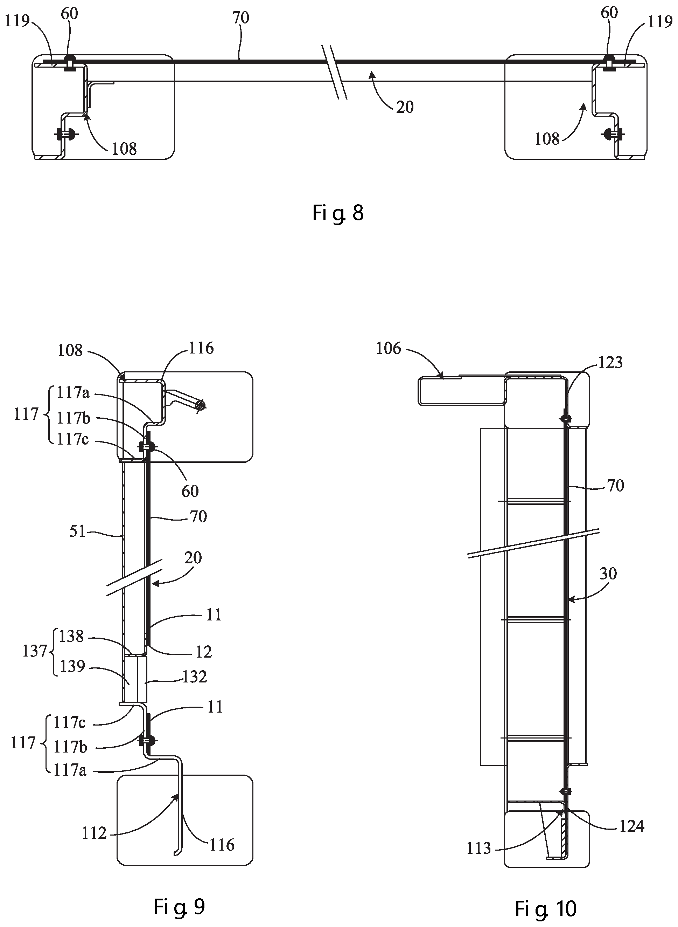

As shown in Figs. 5 and 9, the reinforcing rib 50 includes a side panel reinforcing rib 51 extending in a vertical direction between the top side rail 108 and the underframe 109, and the side panel reinforcing rib 51 is connected to the composite material board 70 constituting the side panel 10. The side panel 10 is located on the inner side of the container body frame 101, so that the composite material board 70 constituting at least a portion of the side panel 10 is located on the inner side of the container body frame 101. Further, the composite material board 70 constituting at least a portion of the side panel 10 is located on one side of the front end corner post 42, the rear end corner post 41, the top side rail 108 and the underframe 109 facing the interior of the container 100. The side panel reinforcing rib 51 is disposed outside the composite material board 70 constituting the side panel 10. Therefore, the reinforcing rib 50 is separated from the interior of the container 100 by the composite material board 70 constituting the side panel 10, the reinforcing rib 50 will not be exposed to the inside of the container 100, and the inner surface of the side panel 10 constituted by the composite material board 70 is flat. The composite material board 70 constituting the side panel 10 may be in direct contact with the goods in the container body, so as to fully utilize the wear resistance of the composite material.

The composite material board 70 constituting the side panel 10 is directly connected to the top side rail 108, the bottom side rail 112, the front end corner post 42 and the rear end corner post 41. The front end corner post 42 and the rear end corner post 41 each include a corner post body 45 and a corner post end plate 46 bent inwardly from the end of the corner post body 45 in the length direction of the container body frame 101. The connecting portion of the corner post end plate 46 with the side panel 10 is parallel to the plane where the side panel 10 is located. The composite material board 70 constituting the side panel 10 is located on the inner side of the corner post end plate 46 and is connected to the corner post end plate 46. Optionally, the corner post bodies 45 of the front end corner post 42 and the rear end corner post 41 have different configurations.

Referring to Fig. 9, in some embodiments, the top side rail 108 and/or the bottom side rail 112 each include a side rail body 116 and a recessed platform 117 which is bent outward in multiple sections from the side rail body 116. The recessed platform 117 includes a first section 117a disposed horizontally, a second section 117b disposed vertically, and a third section 117c disposed horizontally, wherein the second section 117b is connected to the side panel 10, while the first section 117a and the third section 117c are respectively disposed at the upper and lower ends and on the inner and outer sides of the second section 117b to enhance the structural strength of the second section 117b. A space for installing the side panel reinforcing rib 51 is formed between the third section 117c of the top side rail 108 and the third section 117c of the bottom side rail 112. The overall thickness of the side panel reinforcing rib 51 is less than the width of the third section 117c. By setting up the multi-section bending structure of the top side rail 108 and the bottom side rail 112, the side panel 10 connected thereto is located on the inner side of the container body frame 101, and the side panel reinforcing rib 51 is prevented from protruding from the top side rail 108 or the bottom side rail 112 for easy transportation.

As shown in Figs. 7a, 7b and 8, the reinforcing rib 50 further includes a top panel reinforcing rib 52 extending in a transverse direction between a pair of top side rails 108, the top panel reinforcing rib 52 is connected to the composite material board 70 constituting the top panel 20. The top panel 20 is located on the outer side of the container body frame 101, so that the composite material board 70 constituting at least a portion of the top panel 20 is located on the outer side of the container body frame 101. Furthermore, the composite material board 70 constituting at least a portion of the top panel 20 is located on the upper side of a pair of top side rails 108, the front end header 106 and the rear end header 107 facing away from the interior of the container 100, while the top panel reinforcing rib 52 is located on the inner side of the composite material board 70 constituting the top panel 20. Therefore, the outer surface of the top panel 20 constituted by the composite material board 70 is flat, which is conducive to rainwater and the like to flow down from the top panel 20 without accumulation.

The composite material board 70 constituting the top panel 20 is directly connected to the top side rail 108, the front end header 106 and the rear end header 107. The side rail body 116 includes an upper wing plate 119 located at the top and extending along the horizontal plane. The front end header 106 and the rear end header 107 each include a lap plate 122 at the inner end in their respective width directions. The lap plate 122 extends along the horizontal plane. The composite material board 70 constituting the top panel 20 is connected to the upper wing plate 119 and the lap plate 122, which will be described in detail below in conjunction with a top waterproof structure.

The reinforcing rib 50 further includes a front panel reinforcing rib 53 extending vertically between the front end sill 113 and the underframe 109, and the front panel reinforcing rib 53 is connected to the composite material board 70 constituting the front panel 30. The front panel 30 is located on the inner side of the container body frame 101, so that the composite material board 70 constituting at least a portion of the front panel 30 is located on the inner side of the container body frame 101. Furthermore, the composite material board 70 constituting at least a portion of the front panel 30 is located on one side of the front end header 106, the front end sill 113 and the underframe 109 facing the interior of the composite container 100. The front panel reinforcing rib 53 is disposed outside the composite material board 70 constituting the front panel 30. Therefore, the reinforcing rib 50 is separated from the interior of the container 100 by the composite material board 70 constituting the front panel 30, the reinforcing rib 50 will not be exposed to the inside of the container 100, and the inner surface of the front panel 30 constituted by the composite material board 70 is flat. The composite material board 70 constituting the front panel 30 may be in direct contact with the goods in the container to take full advantages of the wear resistance of the composite material.

As shown in Figs. 5 and 10, the composite material board 70 constituting the front panel 30 is directly connected to the front end header 106, the front end sill 113 and the front end corner post 42. The front end corner post 42 further includes another corner post end plate 46 bent inward from the end of the corner post body 45 in the width direction of the container body frame 101. The connecting portion of the another corner post end plate 46 with the front panel 30 is parallel to the plane where the front panel 30 is located. The composite material board 70 constituting the front panel 30 is located on the inner side of the corner post end plate 46 and connected to the another corner post end plate 46. The front end header 106 includes an outer end plate 123 extending in the vertical direction, and the composite material board 70 constituting the front panel 30 is located on the inner side of the outer end plate 123 and connected to the outer end plate 123. The front end sill 113 includes an end sill body 124 extending in the vertical direction, and the composite material board 70 constituting the front panel 30 is located on the inner side of the end sill body 124 and connected to the end sill body 124.

Preferably, the composite material board 70 constitutes the entire panel of each of the side panels 10, the top panel 20 and the front panel 30. Furthermore, the composite material board 70 constituting each of the side panels 10, the top panel 20 and the front panel 30 is a whole composite material board 70. As a result, the number of joints can be reduced, the manufacturing is simplified, and the outer surface of the top panel 20 may be flat, effectively improving the load-bearing performance, while the inner surfaces of the side panel 10 and the front panel 30 may be flat, to take full advantages of the wear resistance of the composite material.

Preferably, the reinforcing rib 50 is also disposed at intervals at the non-joint of the composite material boards 70 to ensure the strength of the surface of the container 100. For example, on the outer side of the side panel 10 constituted by the whole composite material board 70, a plurality of reinforcing ribs 50 extending in a vertical direction between the top side rail 108 and the underframe 109 are disposed at intervals to enhance the strength of the whole composite material board 70 constituting the side panel 10. The number and intervals of the reinforcing ribs 50 at the non-joint may be set according to actual needs, as long as the required strength of the side panel 10, the top panel 20 and the front panel 30 of the container 100 can be ensured.

The specific structure of the reinforcing rib 50 will be described below.

The reinforcing rib 50 includes at least one connecting portion 50A and a protruding portion 50B. The connecting portion 50A is connected to the composite material board 70, and the protruding portion 50B extends from the connecting portion 50A in a direction away from the composite material board 70. The reinforcing rib 50 has a certain structural strength, and can provide support for the composite material board 70 and strengthen the structure.

In the case where two adjacent composite material boards 70 are coplanar with each other, the connecting portion 50A is attached in surface contact with and connected to the two adjacent composite material boards 70. The connecting portion 50A at least partially covers a seam 80 between the two adjacent composite material boards 70, and preferably covers the entire seam 80. The protruding portion 50B is connected to at least one end of the connecting portion 50A in the width direction of the reinforcing rib 50, and the connecting portion 50A is connected to at least one end of the protruding portion 50B in the width direction of the reinforcing rib 50. The protruding portion 50B and the connecting portion 50A are connected at the ends, so that the reinforcing rib 50 can be manufactured by bending the plate, and the manufacturing is simple.

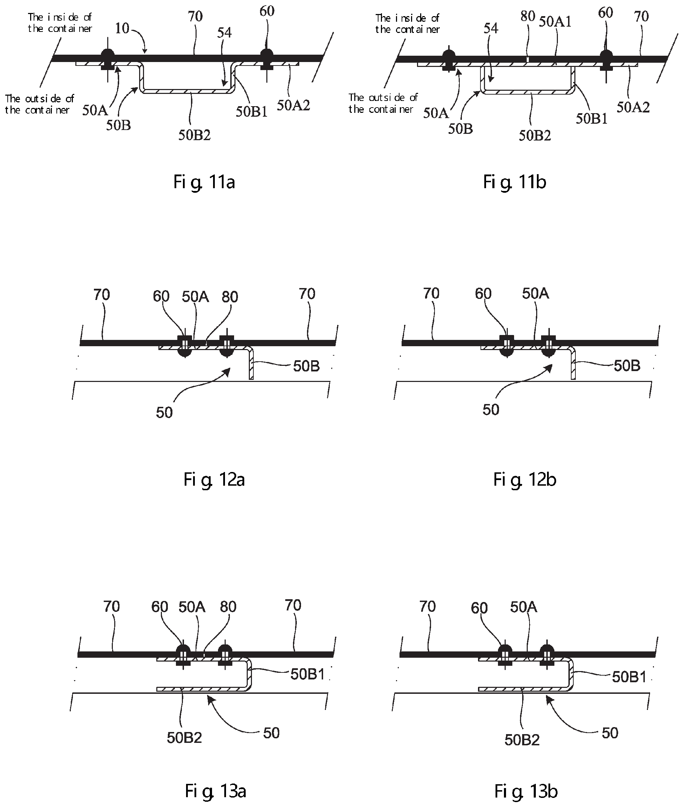

One example is that, as shown in Figs. 12a and 12b, the cross-sectional shape of the reinforcing rib 50 is L-shaped, wherein the connecting portion 50A is a first bending portion of the L-shaped reinforcing rib connected to the composite material board 70, the protruding portion 50B is a second bending portion of the L-shaped reinforcing rib extending from the connecting portion 50A in a direction away from the composite material board 70. And the protruding portion 50B is inclined or perpendicular to the connecting portion 50A, wherein Fig. 12a is a reinforcing rib 50 at the joint of two composite material boards 70, and the connecting portion 50A at least partially covers the seam 80 between the two composite material boards 70, preferably, covers the entire seam 80, so as to ensure the water tightness of the composite container 100.

Another example is that the protruding portion 50B includes a first protruding portion 50B1 and a second protruding portion 50B2. The second protruding portion 50B2 is connected to the first protruding portion 50B1 and is spaced apart from the connecting portion 50A in the thickness direction of the reinforcing rib 50. The first protruding portion 50B1 is inclined or perpendicular to the connecting portion 50A. The second protruding portion 50B2 is parallel to the connecting portion 50A. The two protruding portions with different extension directions make the geometric structure strength of the reinforcing rib better. It should be noted that the number of the first protruding portion 50B1 is not limited, for example, one or two. The first protruding portion 50B1 is connected to the end position or the middle position of the second protruding portion 50B2. At least one end of the second protruding portion 50B2 in the width direction of the reinforcing rib is connected to the first protruding portion 50B1. As shown in Figs. 8 to 11, the cross-sectional shape of the reinforcing rib 50 is rectangular, U-shaped, H-shaped or Z-shaped. Specifically, the straight portion of the rectangular, U-shaped, H-shaped or Z-shaped reinforcing rib is the connecting portion 50A and are attach in surface contact with and connected to the composite material board 70.

Wherein, Figs. 13a, 14a, 15a and 16a show the reinforcing rib 50 at the joint of two composite material boards 70. The connecting portion 50A at least partially covers the seam 80 between the two composite material boards 70, preferably covers the entire seam 80, so as to ensure the sealing of the composite container 100. Figs. 13b, 14b, 15b and 16b show the reinforcing rib 50 at the non-joint of the composite material board 70.

Furthermore, as shown in Figs. 6b and 11b, the dimension of the connecting portion 50A in the width direction of the reinforcing rib 50 is greater than the distance between the two first protruding portions 50B1. In other words, the connecting portion 50A extends beyond the corresponding first protruding portions 50B1 at both ends in the width direction of the reinforcing rib 50.

Alternatively, the reinforcing rib 50 includes two connecting portions 50A, and the two connecting portions 50A are spaced apart in the width direction of the reinforcing rib 50. As shown in Figs. 6a and 11a, the cross-section of the reinforcing rib 50 has an Ω shape, wherein the two legs of the Ω-shaped reinforcing rib are two connecting portions 50A. Wherein, the first protruding portion 50B1 is inclined to the connecting portion 50A (as shown in Fig. 6a), or the first protruding portion 50B1 is perpendicular to the connecting portion 50A (as shown in Fig. 11a). Preferably, the reinforcing rib 50 is used at the non-joint of the composite material board 70, or at least one connecting portion 50A of the reinforcing rib 50 at least partially covers the seam 80 between the two composite material boards 70, preferably, covers the entire seams 80. The composite material boards can be tightly attached in surface contact with the same reinforcing rib at the joint, preventing the jointed composite material boards from deforming outwards and avoiding the generation of larger gaps at the joint due to deformation. This ensures the water tightness of the composite container 100.

It should be noted that, in the above embodiment, the first protruding portion 50B1, the second protruding portion 50B2 and the connecting portion 50A are integrally formed to form an integral component, or the second protruding portion 50B2 and the first protruding portion 50B1 are integrally formed to form an integral component, thereby making the connection of the reinforcing rib 50 simple and ensuring the structural strength.

The composite container 100 of the present application may use reinforcing ribs 50 with different structures in the side panel 10, the top panel 20 and the front panel 30, respectively. For example, the reinforcing ribs 50 with L-shaped cross-section may be used in the side panel 10, and the reinforcing ribs 50 with Ω-shaped cross-section may be used in the top panel 20.

The reinforcing rib 50 and the composite material board 70 are fixedly connected by fasteners 60 including rivets and bolts, structural adhesives or a combination of various modes. The composite material board 70 and the container body frame 101 are fixedly connected by fasteners 60 including rivets and bolts, structural adhesives or a combination of various modes. In this way, the welding of the composite material board can be avoided, the welding workload of the container in the production process can be greatly reduced, and the emission of VOCs (Volatile Organic Compounds) and solid waste can be effectively reduced, ensuring friendliness to operators and the environment.

Referring back to Figs. 6a and 6b, 11a and 11b, the inner side of the protruding portion 50B forms a recessed structure 54. Further, the inner sides of the two first protruding portions 50B1 disposed at intervals and the second protruding portion 50B2 connected to the two first protruding portions 50B1 constitute the recessed structure 54. With such an arrangement, the reinforcing rib 50 can have better structural strength, rigidity and product economy. The connecting portion 50A includes a first connecting portion 50A1 disposed in the recessed structure 54 and/or a second connecting portion 50A2 disposed outside the recessed structure 54. For example, as shown in Figs. 6a and 11a, the connecting portion 50A includes the second connecting portion 50A2, but does not include the first connecting portion 50A1; the fastener 60 connects the second connecting portion 50A2 to the composite material board 70. As shown in Figs. 6b and 11b, the connecting portion 50A includes a first connecting portion 50A1 and two second connecting portions 50A2 connected to the first connecting portion 50A1; the fastener 60 connects at least the second connecting portions 50A2 to the composite material board 70.

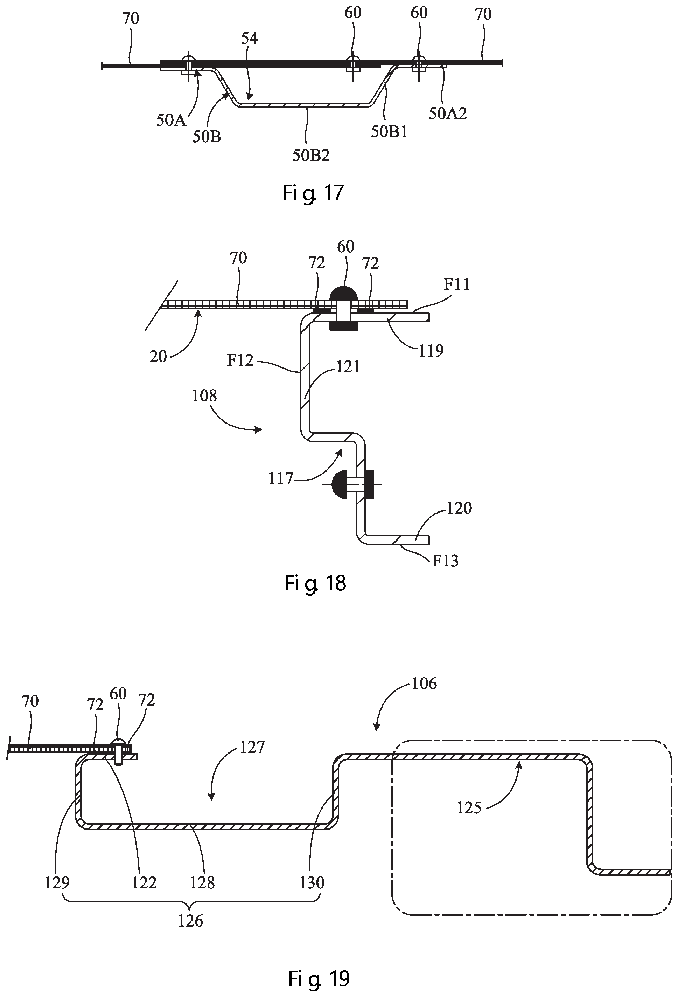

As shown in Fig. 17, two adjacent composite material boards 70 lap each other and the lapping portions are connected by fasteners 60 or structural adhesive. Specifically, the lapping portions are connected by fasteners 60 or structural adhesive alone, the lapping portions are connected to one second connecting portion 50A2 of the reinforcing rib 50 by fasteners 60, and the non-lapping portions are connected to the other second connecting portion 50A2 of the reinforcing rib 50 by fasteners 60. The two jointed composite material boards 70 are lapped and fixed, which can not only improve the structural strength of the composite material boards 70 at the joint, but also prevent water outside the container body from entering the container body from the seam 80, effectively reducing the risk of water entering the container body and improving the waterproof performance of the container body.

A seal 72 is provided between the composite material board 70 and the container body frame 101, and between the composite material board 70 and the reinforcing rib 50. By providing the seal 72, it is possible to prevent water outside the container body from entering the container body from the gap between the composite material board 70 and the container body frame 101, and from the gap between the composite material board 70 and the reinforcing rib 50, thereby effectively reducing the risk of water entering the container body. The seal 72 can be composed of sealant, and sealing components such as adhesive tape or the like. Specifically, the seal 72 is formed by sealant or sealing components at the seams 80 between the composite material boards 70, the riveted and/or screwed joints between the composite material boards 70 and the container body frame 101, and the riveted and/or screwed joints between the composite material boards 70 and the reinforcing rib 50, so as to ensure the overall water tightness of the composite container 100.

The composite material board 70 constituting the side panel 10 has mating surfaces with the container body frame 101 and the reinforcing rib 50, respectively, and these mating surfaces are substantially in the same plane (see Fig. 5). The composite material board 70 constituting the top panel 20 has mating surfaces with the container body frame 101 and the reinforcing rib 50, respectively, and these mating surfaces are substantially in the same plane (see Fig. 7a). The composite material board 70 constituting the front panel 30 has mating surfaces with the container body frame 101 and the reinforcing rib 50, respectively, and these mating surfaces are substantially in the same plane (see Fig. 5). As a result, the composite material board 70 can be attached in surface contact with each corresponding part of the container body frame 101 and each reinforcing rib 50. The seal 72 is provided between the mating surfaces of the composite material board 70 and the reinforcing rib 50. Moreover, the seal 72 is provided between the mating surfaces of the composite material board 70 and the container body frame 101. When adjacent composite material boards 70 are provided and two adjacent composite material boards 70 are lapped, the seal 72 may be provided between the mating surfaces of the two adjacent composite material boards 70 at the joint. The seal is disposed on the mating surface, so that the sealing range is larger and the sealing effect is better, thereby more effectively preventing water outside the container body from entering the container body.

As shown in Fig. 18, the seal 72 is disposed around the fastener 60. Specifically, in the area where the composite material board 70 is connected to the container body frame 101 by the fastener 60, the seal 72 is provided close to the fastener 60 and is disposed on the inner side of the fastener 60 close to the center of the container body and the outer side away from the center of the container body, thereby forming a double-sided seal. In this way, the water can be prevented from entering the container body through the hole for the fastener 60 to pass through and the gap between the composite material board 70 and the container body frame 101, thereby more effectively enhancing the water resistance of the container 100. In the area where the composite material board 70 is connected to the reinforcing rib 50 by the fastener 60, the seal 72 surrounds the fastener 60.

The top waterproof structure is described in detail below in conjunction with Figs. 7b and 18 to 20.

The top panel 20 is laid in the horizontal direction, which is prone to water accumulation. Therefore, the following waterproof design is required for the top of the container 100:

As shown in Fig. 7b, the reinforcing rib 50 is located on the inner side of the top panel 20 and is bonded to the reinforcing rib 50 by structural adhesive. Thus, the main area of the top panel 20 may be connected to the reinforcing rib 50 without using the fastener 60, avoiding drilling holes in the main area, thereby preventing water outside the container body from entering the container body through the fastening holes at the reinforcing rib 50, effectively avoiding water leakage at the fastening holes, and improving the water resistance of the top structure of the container. In addition, by bonding the reinforcing rib 50 with structural adhesive from the inside of the container body, it is possible to prevent the structural adhesive from debonding due to water ingress, and the fixation of the reinforcing rib 50 to the top panel 20 is more secure and reliable.

The outer peripheral portion 21 of the top panel 20 is connected to the top end 102 of the container body frame 101 by the fastener 60. The top end 102 of the container body frame 101 has a top upper surface F11, a top side surface F12 and a top lower surface F13. The top upper surface F11 is connected to the top lower surface F13 via the top side surface F12. The top side surface F12 is located on the inner side of both the top upper surface F11 and the top lower surface F13 toward the center of the top panel 20, so that the top side surface F12 is the inner surface of the container body frame 101 on the side facing the center of the top panel 20 at the top. The fastener 60 is provided on the top upper surface F11, and further, the fastener 60 connects the container body frame 101 to the outer peripheral portion 21 of the top panel 20 at the top upper surface F11. The top side surface F12 extends either vertically or in an inclined vertical direction. With such arrangement, the punching position of the top end 102 of the container body frame 101 is located on the outer side of the container body, and the fastening hole is not communicated with the interior of the container body, thereby preventing water outside the container body from entering the container body through the fastening hole at the container body frame 101, effectively preventing water leakage from the fastening hole, and further improving the water resistance of the top structure of the container body.

The seal 72 is provided between the top upper surface F11 and the composite material board 70. The seal 72 is provided near the fastener 60 and is disposed on the inner side of the fastener 60 near the center of the top panel 20 and on the outer side away from the center of the top panel 20 to form a double-sided seal 72. Alternatively, the seal 72 is provided on the inner side of the fastener 60 near the center of the top panel 20 to form a single-sided seal 72. Thus, water outside the container body can be prevented from entering the interior of the container body from the gap between the top upper surface F11 and the composite material board 70.

Specifically, as shown in Fig. 18, the top side rail 108 (further, the side rail body 116) includes an upper wing plate 119, a lower wing plate 120, and a side rail web 121. The upper wing plate 119 and the lower wing plate 120 both extend along a horizontal plane or a plane perpendicular to the height direction. The side rail web 121 extends along a vertical plane or a plane perpendicular to the width direction of the container body 100. The upper wing plate 119 is located above the lower wing plate 120, and the side rail web 121 is located on the inner side of the upper wing plate 119 and the lower wing plate 120. The top end of the side rail web 121 is integrally connected to the upper wing plate 119, and the bottom end of the side rail web 121 is integrally connected to the lower wing plate 120. The upper surface of the upper wing panel 119 serves as the top upper surface F11, the side surface of the side rail web 121 facing the center of the top panel 20 serves as the top side surface F12, and the lower surface of the lower wing panel 120 serves as the top lower surface F13. The composite material board 70 constituting the top panel 20 is located on the upper side of the upper wing panel 119 and is connected to the upper wing panel 119 through the fastener 60, so that the fastener 60 is located on the outer side of the side rail web 121 facing away from the center of the top panel 20, that is, located on the outer side of the container body. The seal 72 is located between the top panel 20 and the upper wing panel 119 and is at least provided on the inner side of the fastener 60.

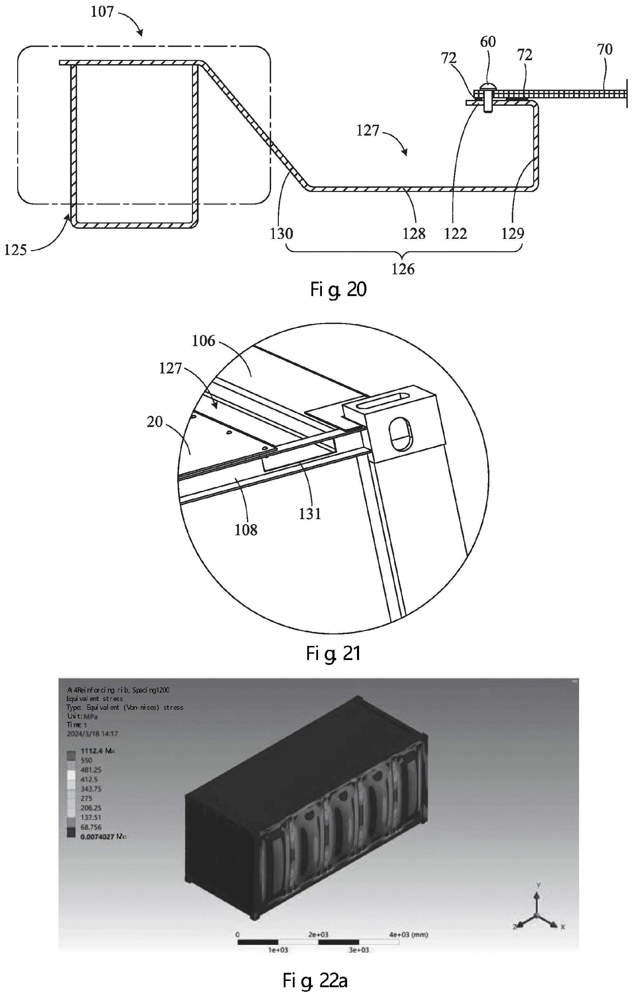

As shown in Figs. 19 and 20, the front end header 106 and the rear end header 107 each include a end header body 125 and a end header waterproofing portion 126. The end header waterproofing portion 126 is located on one side of the end header body 125 close to the center of the top panel 20 and is integrally connected to the end header body 125. Both ends of the end header body 125 are connected to the corner posts 40. Optionally, the end header bodies 125 of the front end header 106 and the rear end header 107 have different structures. The end header waterproofing portion 126 is connected to the top panel 20 by the fastener 60. The end header waterproofing portion 126 is configured to have a groove 127 with an opening facing upward, and the groove 127 extends in the width direction of the container 100. Specifically, the end header waterproofing portion 126 includes a end header bottom panel 128, a end header web plate 129, and a end header connecting plate 130 forming the groove 127. The end header bottom panel 128 is located between the end header web plate 129 and the end header connecting plate 130 and is connected to the bottom end of the end header web plate 129 and the bottom end of the end header connecting plate 130. The end header connecting plate 130 is connected to the end header body 125.

The end header waterproofing portion 126 also includes the above-mentioned lap plate 122. The lap plate 122 is integrally connected to the top end of the end header web plate 129 and is located on the side of the end header web plate 129 facing away from the center of the top panel 20. Optionally, the end header bottom panel 128 and the lap plate 122 both extend along a horizontal plane or a plane perpendicular to the height direction. The end header web plate 129 and the end header connecting plate 130 extend along a vertical plane or a plane perpendicular to the length direction of the container body.

The upper surface of the lap plate 122 serves as the top upper surface F11, the side surface of the end header web plate 129 facing the center of the top panel 20 serves as the top side surface F12, and the lower surface of the end header bottom panel 128 serves as the top lower surface F13. The composite material board 70 constituting the top panel 20 is located on the upper side of the lap plate 122 and is connected to the lap plate 122 through the fastener 60, so that the fastener 60 is located on the outer side of the end header web plate 129 facing away from the center of the top panel 20, that is, located on the outer side of the container body. The seal 72 is located between the top panel 20 and the lap plate 122 and is at least provided on the inner side of the fastener 60.

As shown in Fig. 21, the side rail web 121 may be provided with a through hole 131. In case of rain or other situations, the water flowing into the groove 127 may flow out of the container body 100 through the through hole 131. This prevents water from accumulating in the groove 127.

The reinforcing rib 50 of the present application is made of plate material. The thickness, arrangement spacing, geometric structure, and material of the reinforcing rib 50, as well as the thickness and material of the composite material board 70, are factors that affect the physical performance of the container 100 on various container surfaces. The physical performance includes structural strength, stiffness, equivalent stress, elastic deformation, and so on. The thickness and arrangement spacing of the reinforcing rib 50 are discussed below. It should be noted that the "container surface" refers to the side panel 10, top panel 20 and front panel 30 that form the interior space of the container.

Considering that the container 100 has different stress requirements on each container surface, the thickness and arrangement spacing of the reinforcing rib 50 are set differently on each container surface. Usually, the side panel 10 and the front panel 30 need to bear a larger stress due to their frequent contact with the goods and susceptibility to goods compression. The top panel 20 is less likely to be compressed by the goods, so it requires less stress than the front panel 30 and the side panels 10.

Exemplarily, the spacing D11 between two adjacent side panel reinforcing ribs 51 (see Fig. 2) may be 300 mm to 600 mm, for example, the spacing D11 may be 300 mm, 320 mm, 340 mm, 360 mm, 380 mm, 400 mm, 420 mm, 440 mm, 460 mm, 480 mm, 500 mm, 520 mm, 540 mm, 560 mm, 580 mm, 600 mm, or other suitable values. The thickness t11 (see Fig. 5) of the plate material used to make the side panel reinforcing rib 51 may be 2.5 mm to 4 mm, for example, the thickness t11 may be 2.5 mm, 2.6 mm, 2.8 mm, 3 mm, 3.2 mm, 3.4 mm, 3.6 mm, 3.8 mm, 4 mm, or other suitable values.

The spacing D12 (see Fig. 2) between two adjacent top panel reinforcing ribs 52 may be 500 mm to 800 mm, for example, the spacing D12 may be 500 mm, 520 mm, 540 mm, 560 mm, 580 mm, 600 mm, 620 mm, 640 mm, 660 mm, 680 mm, 700 mm, 720 mm, 740 mm, 770 mm, 780 mm, 800 mm, or other suitable values. The thickness t12 (see Fig. 7b) of the plate material used to make the top panel reinforcing rib 52 may be 2 mm to 3 mm, for example, the thickness t12 may be 2 mm, 2.1 mm, 2.2 mm, 2.3 mm, 2.4 mm, 2.5 mm, 2.6 mm, 2.7 mm, 2.8 mm, 2.9 mm, 3 mm, or other suitable values.

The spacing D13 (see Fig. 2) between two adjacent front panel reinforcing ribs 53 may be 300 mm to 600 mm, for example, the spacing D13 may be 300 mm, 320 mm, 340 mm, 360 mm, 380 mm, 400 mm, 420 mm, 440 mm, 460 mm, 480 mm, 500 mm, 520 mm, 540 mm, 560 mm, 580 mm, 600 mm, or other suitable values. The thickness t13 (see Fig. 5) of the plate material used to make the front panel reinforcing rib 53 may be 2.5 mm to 4 mm, for example, the thickness t13 is 2.5 mm, 2.6 mm, 2.8 mm, 3 mm, 3.2 mm, 3.4 mm, 3.6 mm, 3.8 mm, 4 mm, or other suitable values.

It should be noted that the spacing and thickness of the above reinforcing ribs 50 are applicable to containers of different sizes, such as 20-foot containers, 40-foot containers, 40-foot high-cube containers, and are suitable for containers 100 in which at least one of the side panel 10, top panel 20 and front panel 30 is constituted by the composite material board 70.

Optionally, the spacing between side panel reinforcing ribs 51 and corner posts 40 that are adjacent to each other is the same as or similar to the spacing between two adjacent side panel reinforcing ribs 51. Exemplarily, the spacing between side panel reinforcing ribs 51 and corner posts 40 that are adjacent to each other is slightly larger than the spacing between two adjacent side panel reinforcing ribs 51. The spacing between front panel reinforcing ribs 53 and corner posts 40 that are adjacent to each other is the same as or similar to the spacing between two adjacent front panel reinforcing ribs 53. Exemplarily, the spacing between front panel reinforcing ribs 53 and corner posts 40 that are adjacent to each other is slightly larger than the spacing between two adjacent front panel reinforcing ribs 53. The spacing between top panel reinforcing ribs 52 and end headers that are adjacent to each other is the same as or similar to the spacing between two adjacent top panel reinforcing ribs 52. Exemplarily, the spacing between top panel reinforcing ribs 52 and corner posts 40 that are adjacent to each other is slightly larger than the spacing between two adjacent top panel reinforcing ribs 52.

The plate material of the reinforcing rib 50 is preferably a high-strength steel with a yield strength of 345 MPa or more. The thickness t2 of the composite material board 70 (see Fig. 5) can be 2.5 mm to 4 mm, for example, the thickness t2 is 2.5 mm, 2.6 mm, 2.8 mm, 3 mm, 3.2 mm, 3.4 mm, 3.6 mm, 3.8 mm, 4 mm, or other suitable values. As a result, the composite material board itself has a certain ability to resist deformation and impact. The material of the composite material board 70 is a known composite material or a composite material provided in the present application. The material of the composite material board 70 is preferably a known composite material with a tensile strength of 248 MPa or more or a composite material provided in the present application. In order to reduce the weight of the container 100 and effectively increase the structural strength of the top panel 20, the front panel 30 and the side panel 10, the composite material board 70 may preferably be made of at least one of a continuous fiber reinforced thermoplastic composite material, a thermosetting fiber reinforced composite material and a thermoplastic glass steel plate. Specifically, the composite material mainly includes glass fiber and resin, which can constitute a known composite material or a composite material provided in the present application. Optionally, in the present application, the mass percentage of the glass fiber may be 60% to 70%, such as 60%, 62%, 64%, 66%, 68%, 70%, or other suitable contents; the mass percentage of the resin can be 30% to 35%, such as 30%, 31%, 32%, 33%, 34%, 35%, or other suitable contents. A small amount of additives may also be added to the composite material to form a plate material.

The various parameters of the present application are selected from the above ranges to ensure that the physical properties such as structural strength and stiffness of the container 100 can all reach the expected strength level of container while using the least amount of materials, including composite materials and reinforcing ribs to reduce material consumption and weight of the container.

The present application conducts performance tests on a 20-foot container in which the side panel 10, the top panel 20 and the front panel 30 are all constituted by composite material boards 70 to verify the preferred arrangement solution of the reinforcing rib 50 on the side panel 10, the top panel 20 and the front panel 30.

Simulation conditions of the side panel 10: the side panel 10 adopts a whole composite material board 70 with a thickness of 3 mm, and is provided with 4 to 8 side panel reinforcing ribs 51 with a plate thickness of 3 mm. The spacing between two adjacent side panel reinforcing ribs 51 is selected from 320 mm to 920 mm. A load of 0.6 P is applied to the side panel 10.

Simulation conditions of the front panel 30: the front panel 30 adopts a whole composite material board 70 with a thickness of 3 mm, and is provided with 1 to 3 front panel reinforcing ribs 53 with a plate thickness of 3 mm. The spacing between two adjacent front panel reinforcing ribs 53 is selected from 310 mm to 448 mm, with one front panel reinforcing rib 53 centered, and a load of 0.6 P is applied to the front panel 30.

Simulation conditions of the top panel 20: the top panel 20 adopts a whole composite material board 70 with a thickness of 3 mm, and is provided with 5 to 7 top panel reinforcing ribs 52 with a plate thickness of 2.5 mm. The spacing between two adjacent top panel reinforcing ribs 52 is selected from 510 mm to 760 mm. A load of 300 KG is applied to an area of 300 mm × 600 mm of the top panel 20.

The equivalent stress and elastic deformation of the side panel 10, the front panel 30 and the top panel 20 were tested, and the test results are shown in Figs. 22a to 27c.

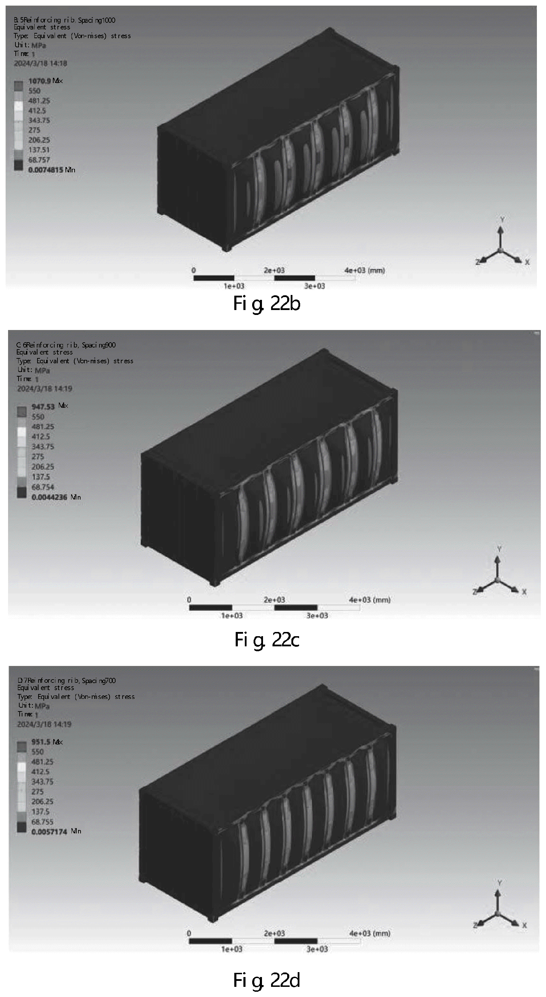

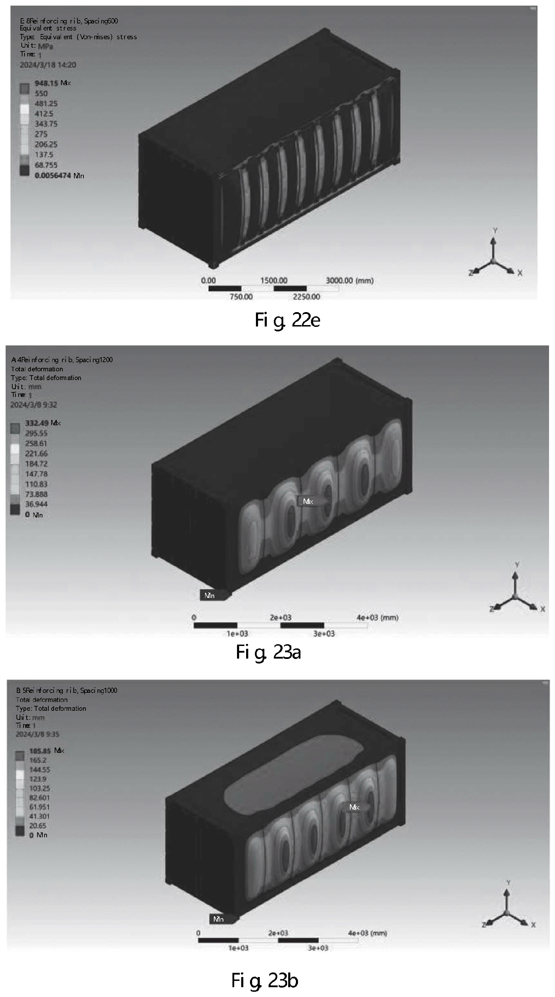

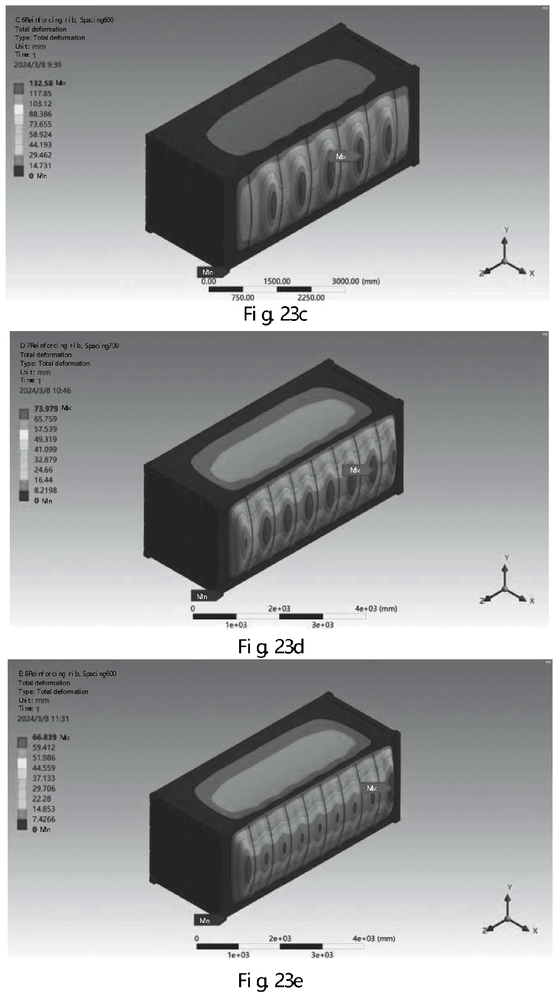

Figs. 22a to 22e show the equivalent stress of the side panel 10 with different numbers of reinforcing ribs 50, and Figs. 23a to 23e show the elastic deformation of the side panel 10 with different numbers of reinforcing ribs 50. The side panel 10 in Figs. 22a and 23a is provided with 4 side panel reinforcing ribs 51 with a spacing of 920 mm. The side panel 10 in Figs. 22b and 23b is provided with 5 side panel reinforcing ribs 51 with a spacing of 720 mm. The side panel 10 in Figs. 22c and 23c is provided with 6 side panel reinforcing ribs 51 with a spacing of 640 mm. The side panel 10 in Figs. 22d and 23d is provided with 7 side panel reinforcing ribs 51 with a spacing of 420 mm. The side panel 10 in Figs. 22e and 23e is provided with 8 side panel reinforcing ribs 51 with a spacing of 320 mm.

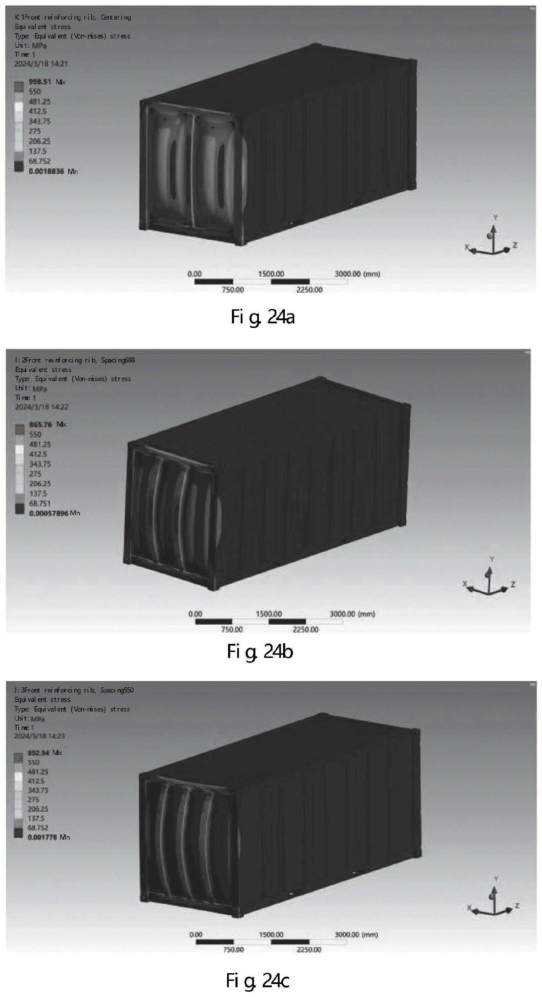

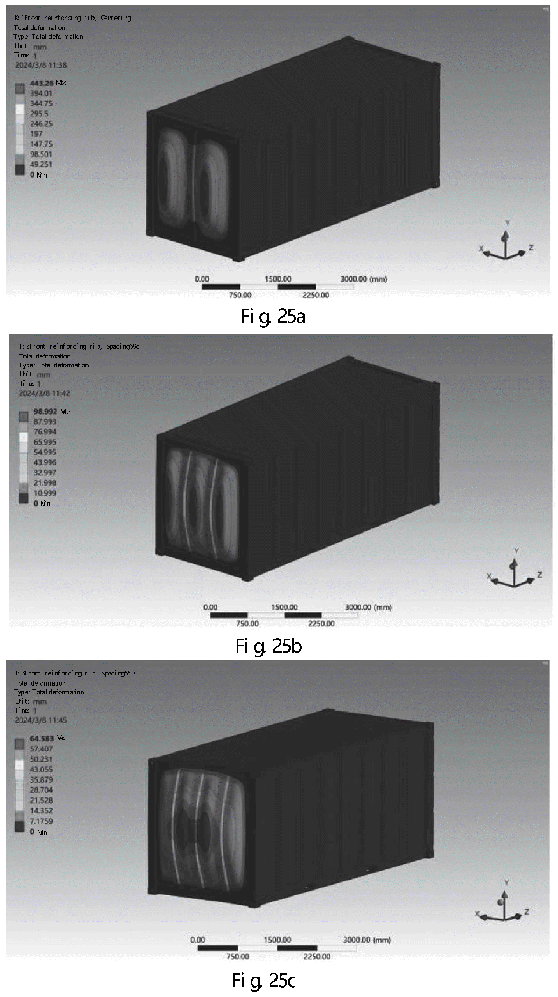

Figs. 24a to 24c show the equivalent stress of the front panel 30 with different numbers of reinforcing ribs 50, and Figs. 25a to 25c show the elastic deformation of the front panel 30 with different numbers of reinforcing ribs 50. The front panel 30 in Figs. 24a and 25a is provided with one front panel reinforcing rib 53 being centered. The front panel 30 in Figs. 24b and 25b is provided with two front panel reinforcing ribs 53 with a spacing of 448 mm. The front panel 30 in Figs. 24c and 25c is provided with 3 front panel reinforcing ribs 53 with a spacing of 310 mm.

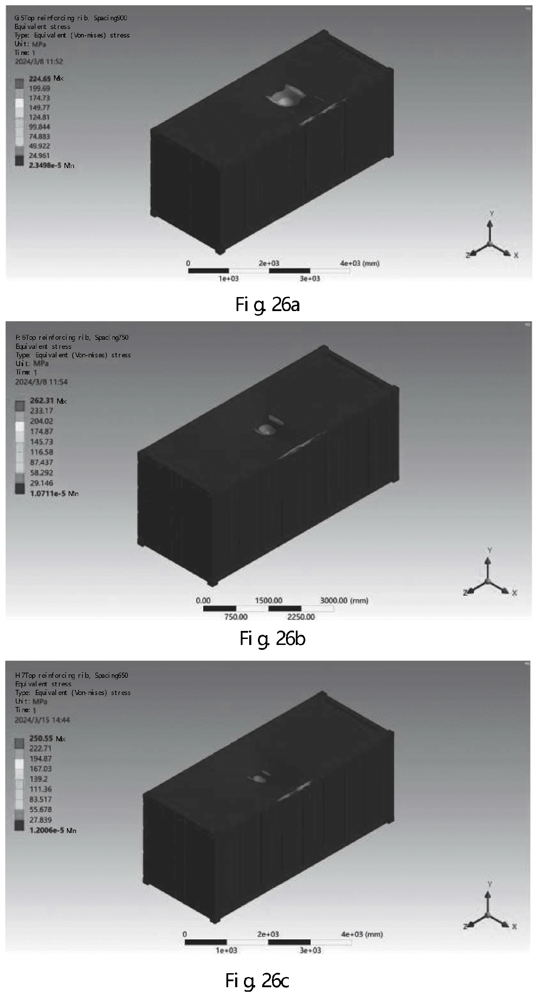

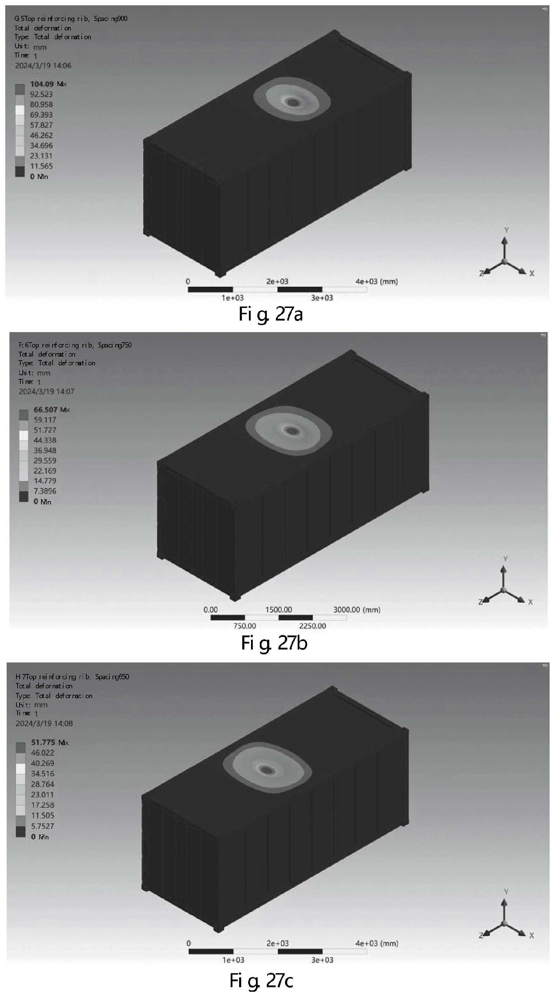

Figs. 26a to 26c show the equivalent stress of the top panel 20 with different numbers of reinforcing ribs 50, and Figs. 27a to 27c show the elastic deformation of the top panel 20 with different numbers of reinforcing ribs 50. The top panel 20 in Figs. 26a and 27a is provided with 5 top panel reinforcing ribs 52 with a spacing of 760 mm. The top panel 20 in Figs. 26b and 27b is provided with 6 top panel reinforcing ribs 52 with a spacing of 610 mm. The top panel 20 in Figs. 26c and 27c is provided with 7 top panel reinforcing ribs 52 with a spacing of 510 mm.

It should be noted that, theoretically, an equivalent stress exceeding 550 Mpa indicates that the area has yielded. When the equivalent stress exceeds 550 Mpa, the larger the red area in the figure is, the larger the yield area is and the weaker the structural strength is.

Based on the above tests, the test data obtained are shown in Tables 1 to 3 below.

| Test of Side Panel | Maximum Equivalent Stress | Maximum Elastic Deformation |
|---|---|---|
| | (MPA) | (mm) |
| 4 side panel reinforcing ribs, with a spacing of 920 mm | 608 | 332 |
| 5 side panel reinforcing ribs, with a spacing of 720 mm | 579 | 185 |
| 6 side panel reinforcing ribs, with a spacing of 620 mm | 519 | 132 |
| 7 side panel reinforcing ribs, with a spacing of 420 mm | 416 | 73 |
| 8 side panel reinforcing ribs, with a spacing of 320 mm | 393 | 66 |

| Test of Front Panel | Maximum Equivalent Stress (MPA) | Maximum Elastic Deformation (mm) |
|---|---|---|
| 1 front panel reinforcing rib, being centered | 883 | 443 |
| 2 front panel reinforcing ribs, with a spacing of 448 mm | 599 | 98 |
| 3 front panel reinforcing ribs, with a spacing of 310 mm | 469 | 64 |

| Test of Top Panel | Maximum Equivalent Stress (MPA) | Maximum Elastic Deformation (mm) |
|---|---|---|
| 5 top panel reinforcing ribs, with a spacing of 760 mm | 216 | 104 |
| 6 top panel reinforcing ribs, with a spacing of 448 mm | 214 | 66 |
| 7 top panel reinforcing ribs, with a spacing of 310 mm | 201 | 51 |

### Conclusion:

When there are 4 to 6 side panel reinforcing ribs 51, the elastic deformation of the side panel 10 is too large. When there are 7 or 8 side panel reinforcing ribs 51, the equivalent stress and elastic deformation of the side panel 10 are not much different. For cost considerations, the side panel reinforcing ribs 51 are preferably 7, and the spacing is preferably 420 mm. When there is 1 front panel reinforcing rib 53, the elastic deformation of the front panel 30 is too large. When there are 2 or 3 front panel reinforcing ribs 53, the equivalent stress and elastic deformation of the front panel 30 are not much different. For cost considerations, the side panel reinforcing ribs 51 are preferably 2, and the spacing is preferably 448 mm. When there are 5 top panel reinforcing ribs 52, the elastic deformation of the top panel 20 is too large. When there are 6 or 7 top panel reinforcing ribs 52, the equivalent stress and elastic deformation of the top panel 20 are not much different. For cost considerations, the top panel reinforcing ribs 52 are preferably 6, and the spacing is preferably 610 mm.

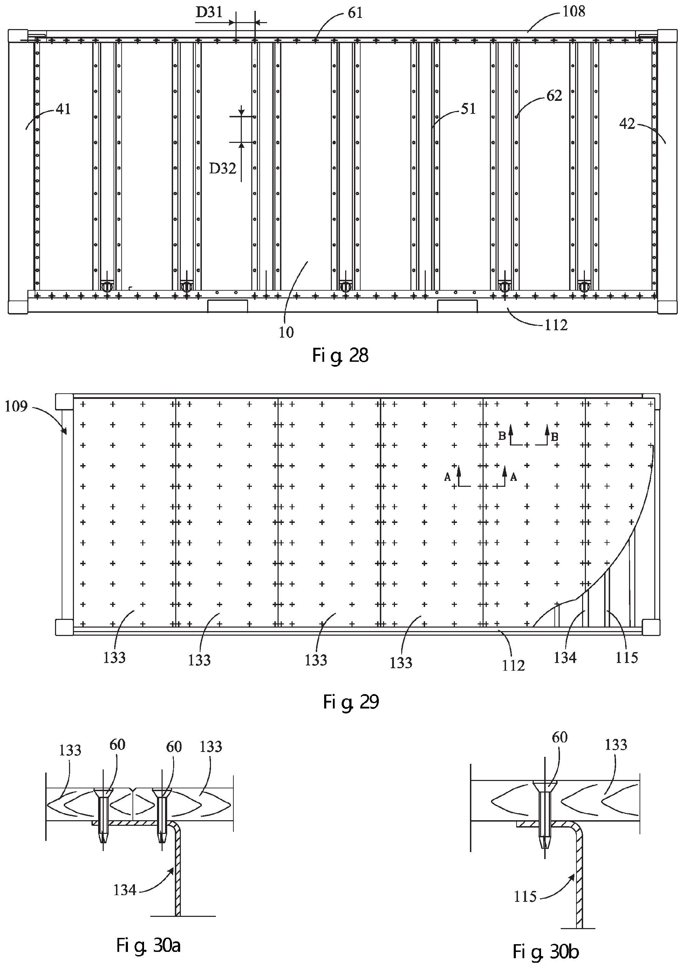

As shown in Fig. 28, the spacings of the fastener 60 at different positions are different. The fastener 60 includes a first fastener 61 and a second fastener 62. The composite material board 70 is connected to the container body frame 101 through the first fastener 61, and the composite material board 70 constituting the front panel 30 and/or the side panel 10 is connected to the reinforcing rib 50 through the second fastener 62. There is a spacing D31 between two adjacent first fasteners 61 and a spacing D32 between two adjacent second fasteners 62. The connection between the composite material board 70 and the container body frame 101 needs to be firmer and more reliable, so that D31 < D32. Optionally, the spacing D31 is 80 mm to 180 mm, for example, the spacing D31 may be 80 mm, 100 mm, 110 mm, 120 mm, 130 mm, 140 mm, 150 mm, 160 mm, 180 mm, or other suitable values. The spacing D32 is 120 mm to 300 mm, for example, the spacing D32 may be 120 mm, 160 mm, 180 mm, 200 mm, 220 mm, 240 mm, 260 mm, 280 mm, 300 mm, or other suitable values. The spacing of the fastener is set within the above range, which can ensure reliable connection between the composite material board and the container body frame and the reinforcing ribs, and resist deformation of the composite material board.

Fig. 29 shows the bottom panel 110 of the container 100, which is arranged in transverse seams. Specifically, the bottom panel 110 includes a plurality of bottom panel units 133. The two ends of the bottom panel units 133 in the width direction of the container 100 are lapped on two oppositely disposed bottom side rails 112, and a plurality of bottom panel units 133 are laid in the length direction of the container 100 to form the bottom panel 110. Compared with the conventional bottom panel 110 with longitudinal seam, the present solution does not need to configure a middle beam of the bottom panel 110 located at the center of the bottom panel 110 and extending in the length direction of the container 100, thereby reducing the consumption of steel. The material cost of the container 100 is low, making it more green and environmentally friendly, and the service life of the underframe 109 and the bottom panel 110 is prolonged.

The bottom panel 110 may be connected to the bottom crossbeam 115 of the underframe 109 through fasteners 60 such as self-tapping screws. Specifically, as shown in Figs. 30a and 30b, the underframe 109 includes a conventional bottom crossbeam 115 and a wide bottom crossbeam 134. The bottom crossbeam 115 and the wide bottom crossbeam 134 both extend in the width direction of the container 100 and are located on the lower side of the bottom panel unit 133. The width of the wide bottom crossbeam 134 is greater than that of the bottom crossbeam 115. The bottom panel unit 133 is independently connected to the bottom crossbeam 115 by a single row of fasteners 60, while two adjacent bottom panel units 133 are respectively connected to the same wide bottom crossbeam 134 through a single row of fasteners 60. The bottom panel unit 133 is fixed at the joint with a wider wide bottom crossbeam 134, such that the bottom panel 110 is more firmly and reliably fixed at the joint. Optionally, both the wide bottom crossbeam 134 and the bottom crossbeam 115 are made of angle steel.

Returning back to Figs. 3 and 9, the portion of the side panel 10 close to the bottom side is provided with a clearance hole 11. At least one fixing member 132 for auxiliary fixation is disposed in the inner side of the reinforcing rib 50 (specifically in a recessed structure). The fixing member 132 may pass through external components, such as binding ropes, steel wires or other rope-like elements, or other connectors such as hooks or buckles, to assist in securing the goods inside the container body. The clearance hole 11 is used to fix the end of a rope-like elements such as ropes to the fixing member 132 at the bottom of the side panel 10, so as to secure the goods with the rope-like elements. Optionally, the fixing member 132 has a shape such as cylindrical or annular. The fixing member 132 may be welded to the reinforcing rib 50 and/or the bottom side rail 112. The protruding portion 50B of the reinforcing rib 50 forms a recessed structure 54, and the fixing member 132 is located within the recessed structure 54. The fixing member 132 is disposed at the bottom of the reinforcing rib 50. Optionally, the container 100 further includes a fixing assembly 137 corresponding to each fixing member 132. The fixing assembly 137 includes a cover plate 138 and two sealing plates 139 disposed on both sides of the fixing member 132. One end of the fixing member 132 is fixedly connected to the bottom side rail 112 and the other end is fixedly connected to the cover plate 138. The cover plate 138, the two sealing plates 139 and the inner wall of the protruding portion 50B form a space for guiding external components through the fixing member 132.

Referring back to Fig. 5, the inner side of the front end corner post 42 is provided with a reinforcing member 135 vertically extending. The reinforcing member 135 is located on the inner side of the front end corner post 42 and is connected to the front end corner post 42. Both ends of the reinforcing member 135 are respectively connected to the top corner piece 111a and the bottom corner piece 111b to increase the structural strength of the front end corner post 42. The thickness of the plate material used to make the reinforcing member 135 is 2.5 mm to 4 mm, for example, may be 2.5 mm, 2.6 mm, 2.8 mm, 3 mm, 3.2 mm, 3.4 mm, 3.6 mm, 3.8 mm, 4 mm, or other suitable values. to ensure that the container 100 has sufficient stacking capacity.

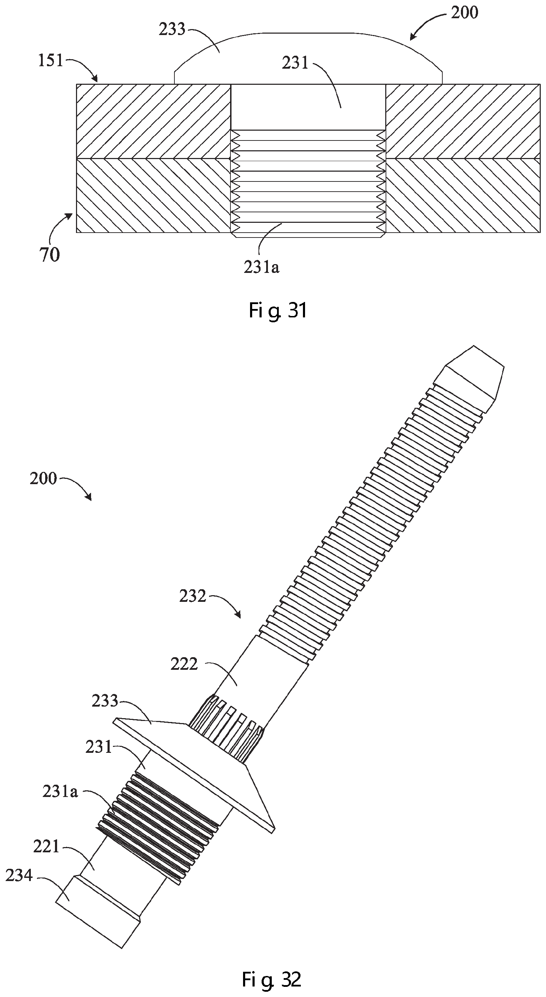

Optionally, the fastener 60 used to secure the composite material board 70 is a rivet. When conventional rivets are used, the tail of the rivets will protrude from the composite material board after installation, which will cause damage to the goods and personnel in the container. The present application improves the rivet such that its tail does not protrude from the composite material board as much as possible. Specifically, the composite material board 70 is connected to other container body member 151 with rivets 200. The container body member 151 may be the top side rail 108, the front end header 106, the rear end header 107 or the corner post 40 of the container body frame 101, or may be other structures such as reinforcing ribs connected and secured to the composite material board 70. The rivet 200 of the present application is described below in conjunction with Figs. 31 to 35.

As shown in Figs. 31 and 32, the rivet 200 may include a rivet sleeve 231. The rivet sleeve 231 may be configured to be cylindrical and have a tip structure 231a disposed on the outer circumference. The rivet sleeve 231 is configured such that when the inner circumference of the rivet sleeve 231 is subjected to an external force in its own radial direction, the rivet sleeve 231 can at least partially expand and deform in its own radial direction, so that the tip structure 231a is at least partially embedded in the interior of the composite material board 70. After installation, the outer circumference of the portion where the rivet sleeve 231 overlaps with the container body member 151 and the composite material board 70 can expand and deform in its own radial direction. After the rivet sleeve 231 undergoes the expansion and deformation, the tip structure 231a is embedded in the interior of the composite material board 70, thereby achieving a riveted connection. The embedding of the tip structure 231a into the interior of the composite material board 70 can ensure the connection strength and improve the pull-out force of the rivet 200, such that the rivet 200 does not need to protrude above the composite material board after riveting is completed, and its tail may be roughly flush with the composite material board to avoid damage to the goods and personnel in the container.

In actual selection, the length of the rivet sleeve 231 is not less than the sum of the thicknesses of the container body member 151 and the composite material board 70. For example, the length of the rivet sleeve 231 is equal to the sum of the thicknesses of the container body member 151 and the composite material board 70, or the length of the rivet sleeve 231 is slightly greater than the sum of the thicknesses of the container body member 151 and the composite material board 70. In this way, after riveting is completed, the tail of the rivet 200 (i.e., the end of the rivet sleeve 231) may be configured to be roughly flush with the composite material board 70, preventing the user from being injured by the protruding portion of the rivet 200.

Optionally, the tip structure 231a is configured as a triangular thread to facilitate the embedding of the tip structure 231a, making the riveting operation more labor-saving. In this case, the tip structure 231a may extend along the circumferential direction of the rivet sleeve 231 and form a helical shape along the axial direction. The cross-sectional shape of the triangular thread is triangular. Alternatively, a plurality of tip structures 231a are evenly disposed on the outer peripheral surface of the rivet sleeve 231, with the tip structure 231a formed in a conical shape. In other words, the rivet sleeve 231 resembles the shape of a mace, making it easier to embed.

The rivet 200 may further include a cap body 233. The cap body 233 is connected to the first end of the rivet sleeve 231. The outer circumference of the cap body 233 is greater than that of the rivet sleeve 231. Furthermore, the outer peripheral portion of the cap body 233 radially protrudes outward from the rivet sleeve 231. In the installed state, the cap body 233 is located on the outer side of the container body member 151, and the outer peripheral portion of the cap body 233 may abut against the surface of the container body member 151 in the axial direction of the rivet 200. After the expansion and deformation of the rivet sleeve 231, the tip structure 231a is embedded in the interior of the composite material board 70, and the cap body 233 abuts against the surface of the container body member 151 such that the container body member 151 is sandwiched between the cap body 233 and the composite material board 70, thereby realizing the connection between the container body member 151 and the composite material board 70, and the connection structure is secure and reliable. Optionally, the cap body 233 may be integrally formed with the rivet sleeve 231 for easy assembly.

Specifically, the rivet 200 further includes a mandrel 232 and an expansion head 234. The mandrel 232 is axially inserted into the interior of the cap body 233 and the rivet sleeve 231. In other words, the cap body 233 and the rivet sleeve 231 are sleeved on the mandrel 232. The expansion head 234 is connected to one end of the mandrel 232, and the radial dimension of the expansion head 234 is greater than the inner diameter dimension of the rivet sleeve 231 when no expansion deformation occurs. The expansion head 234 may be integrally formed with the mandrel 232. The rivet 200 is configured such that the mandrel 232 may slide relative to the rivet sleeve 231 in the axial direction of the rivet 200 when the rivet 200 is not riveted, and the expansion head 234 protrudes from the second end of the rivet sleeve 231 when the rivet 200 is not riveted, and is embedded in the interior of the rivet sleeve 231 as the mandrel 232 slides when the rivet 200 is riveted. The expansion head 234 may press the tip structure 231a into the composite material board 70 and keep the tip structure in the composite material board 70 so as not to fall out.

In actual operation, the rivet sleeve 231 sequentially passes through the container body member 151 and the composite material board 70, with the cap body 233 abutting against the container body member 151. At this time, the mandrel 232 is pulled to move, the expansion head 234 is gradually embedded into the interior of the rivet sleeve 231, so that the rivet sleeve 231 is expanded and deformed along its own radial direction, and the tip structure 231a on the outer peripheral surface of the rivet sleeve 231 is at least partially embedded into the interior of the composite material board 70. Further, in order to improve the strength of the connection, the outer peripheral surface of the portion where the rivet sleeve 231 overlaps with the container body member 151 and the composite material board 70 is provided with the tip structure 231a, and the circumferential dimension of the expansion head 234 may be not less than the thickness of the composite material board 70, thereby ensuring that the tip structure 231a remains embedded in the container body member 151 and the composite material board 70.

After the rivet 200 is installed, the rivet 200 can be partially separated by breaking or other means to prevent the rivet 200 from protruding excessively relative to the container body member 151 and causing harm to personnel outside the container. Therefore, the mandrel 232 may include an embedded portion 221 and a detachment portion 222. The expansion head 234 may be connected to one end of the embedded portion 221, while the detachment portion 222 may be connected to the other end of the embedded portion 221. The rivet 200 is configured such that the embedded portion 221 is hidden inside the rivet sleeve 231 when the rivet 200 is riveted, and the detachment portion 222 protrudes from the first end of the rivet sleeve 231 when the rivet 200 is not riveted. More specifically, it protrudes from the cap body 233, and is detached from the embedded portion 221 by external force when the rivet 200 is riveted.

After riveting is completed, both the embedded portion 221 and the expansion head 234 are at least partially located on the inner side of the rivet sleeve 231. Optionally, both the embedded portion 221 and the expansion head 234 may be integrally formed for easy assembly. The detachment portion 222 and the embedded portion 221 can be separated under the action of an external force, or the detachment portion 222 is detachably connected to the embedded portion 221. After riveting is completed, the detachment portion 222 may be removed. After riveting is completed, at least the embedded portion 221 does not protrude outward from both the rivet sleeve 231 and the cap body 233. For example, both the embedded portion 221 and the expansion head 234 do not protrude outward from both the rivet sleeve 231 and the cap body 233.

Optionally, the length of the rivet sleeve 231 is set to be equal to the sum of the thicknesses of the container body member 151 and the composite material board 70, and the expansion head 234 does not protrude outward from the rivet sleeve 231 when riveting is completed. In this way, after the rivet 200 is riveted, its tail (i.e., the end of the rivet sleeve 231 and the expansion head 234) is roughly flush with the composite material board 70, preventing damage to the goods and personnel inside the container.

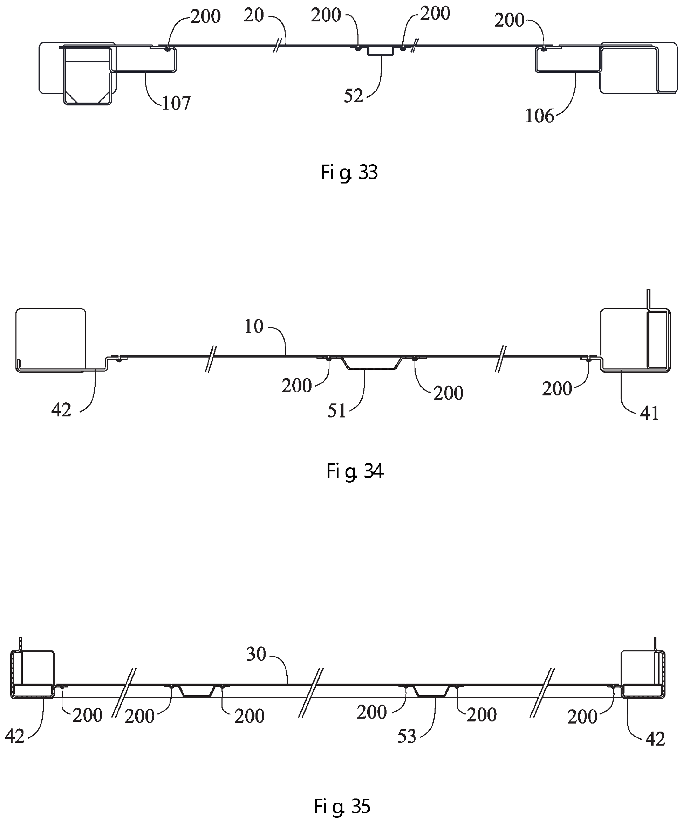

As shown in Figs. 33 to 35, the composite material board 70 constituting the top panel 20 is connected to the rear end header 107, the top side rail 108 and/or the front end header 106 by the rivets 200. The composite material board 70 constituting the front panel 30 is connected to the front end header 106, the front end sill 113 and/or the front end corner post 42 by the rivets 200. The composite material board 70 constituting the side panel 10 is connected to the top side rail 108, the bottom side rail 112, the front end corner post 42 and/or the rear end corner post 41 by the rivets 200. The front panel reinforcing rib 53 is connected to the composite material board 70 constituting the front panel 30 by the rivets 200, the side panel reinforcing rib 51 is connected to the composite material board 70 constituting the side panel 10 by the rivets 200, and the top panel reinforcing rib 52 is connected to the composite material board 70 constituting the top panel 20 by the rivets 200. As a result, the rivets 200 located on the top panel 20 are roughly flush with the upper surface of the top panel 20 to make the outside neat; the rivets 200 located on the front panel 30 are roughly flush with the inner surface of the front panel 30, the rivets 200 located on the side panel 10 are roughly flush with the inner surface of the side panel 10, to avoid damage to the goods and personnel in the container.

When the connection mode with the fastener 60 is adopted, since the fastener 60 needs to be perforated on the reinforcing rib 50 and the composite material board 70, water outside the container body can easily enter the container body through the fastener 60. Therefore, the present application adopts a concealed design for the fastener 60.

The concealed design is applied to the fastener 60 at the reinforcing rib 50.

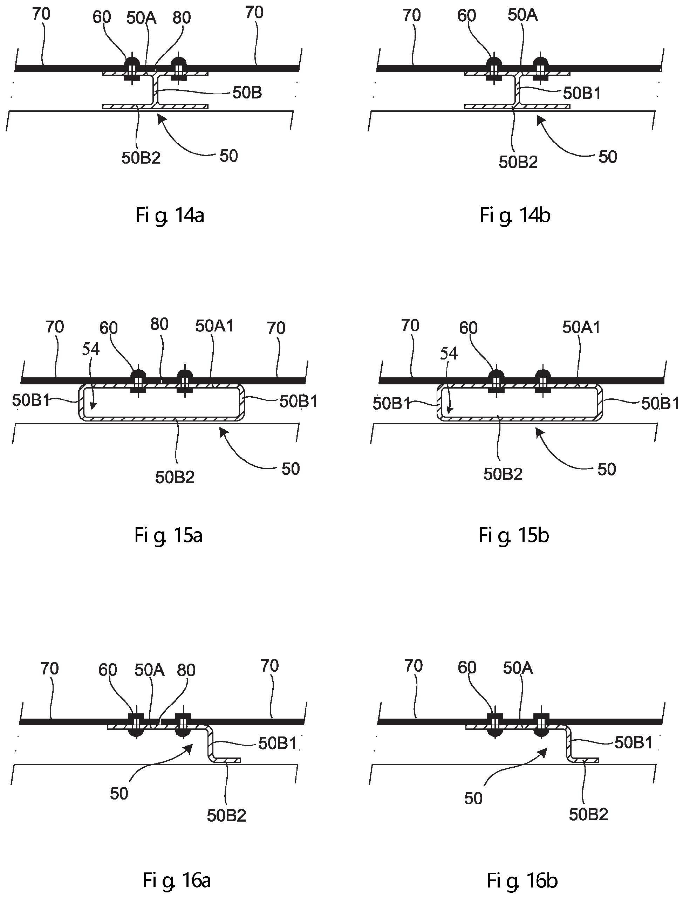

As described above, the connecting portion 50A includes a first connecting portion 50A1 disposed in the recessed structure 54 and/or a second connecting portion 50A2 disposed outside the recessed structure 54. As shown in Figs. 15a and 15b, the connecting portion 50A includes the first connecting portion 50A1, but does not include the second connecting portion 50A2; the first connecting portion 50A1 is connected to the two ends of the protruding portion 50B in the width direction of the reinforcing rib 50. The fastener 60 connects the first connecting portion 50A1 to the composite material board 70. The cross-sectional shape of the reinforcing rib 50 is, for example, rectangular.

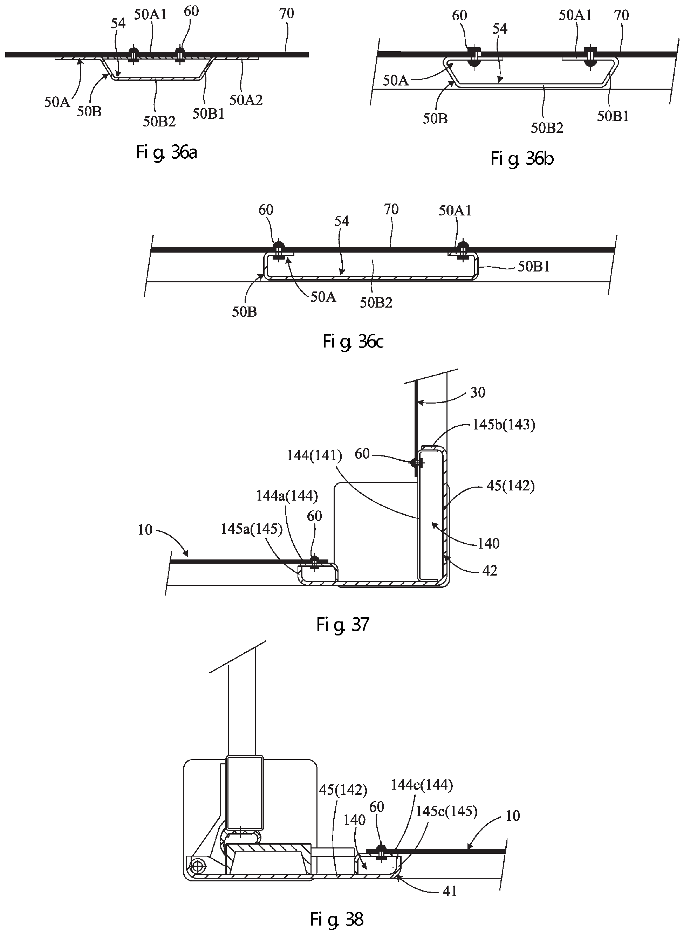

As shown in Fig. 36a, the connecting portion 50A includes a first connecting portion 50A1 and two second connecting portions 50A2 connected to the first connecting portion 50A1. The two second connecting portions 50A2 are respectively connected to the two ends of the protruding portion 50B in the width direction of the reinforcing rib 50. The first connecting portion 50A1 is connected to the composite material board 70 through the fastener 60, and the two second connecting portions 50A2 are bonded to the composite material board 70 through structural adhesive. Both parts of the connecting portions are connected to the composite material board, so that the reliability of the connection between the reinforcing rib and the composite material board is better.

As shown in Figs. 36b and 36c, the connecting portion 50A includes two first connecting portions 50A1, but does not include the second connecting portion 50A2, and the two first connecting portions 50A1 are respectively connected to the two ends of the protruding portion 50B in the width direction of the reinforcing rib 50. The fastener 60 connects the two first connecting portions 50A1 to the composite material board 70. The difference is that the first protruding portion 50B1 in Fig. 36b is perpendicular to the first connecting portion 50A1, and the first protruding portion 50B1 in Fig. 36b is inclined to the first connecting portion 50A1.

The fastener 60 is disposed at the first connecting portion 50A1, so that the outer end of the fastener 60 can be hidden in the recessed structure 54 and shielded by the protruding portion 50B. Thus, water outside the container body can be further prevented from entering the container body through the fastener 60 at the reinforcing rib 50, effectively reducing the risk of water entering the container body and improving the sealing and waterproof performance of the container body. Moreover, the fastener 60 at the reinforcing rib 50 cannot be observed from the outside of the container 100, which can improve the overall aesthetics of the product.

A concealed design is applied to the fastener 60 at the container body frame 101.

The component constituting the container body frame 101 includes an inner side panel 141, an outer side panel 142, and a transition panel 143 connected between the inner side panel 141 and the outer side panel 142. The outer side panel 142 is located on the outer side of the inner side panel 141 facing away from the center of the container body frame 101, and shields the inner side panel 141. The outer side panel 142, the inner side panel 141, and the transition panel 143 form a concave cavity 140 to facilitate the installation of the fastener 60 and increase the structural strength. The inner side panel 141 is connected to the composite material board 70 through the fastener 60 such that the outer end of the fastener 60 is hidden in the concave cavity 140.

Specifically, as shown in Fig. 37, the front end corner post 42 includes a corner post body 45, a first corner post transition panel 145a, and a second corner post transition panel 145b. The first corner post transition panel 145a extends inwardly from the end of the corner post body 45 in the length direction of the container body frame 101. The second corner post transition panel 145b extends inwardly from the end of the corner post body 45 in the width direction of the container body frame 101. The corner post inner side panel 144 located on the inner side of the front end corner post 42 is constructed into two separate components, that is, the first corner post inner side panel 144a and the second corner post inner side panel 144b, to be connected to the composite material boards 70 constituting the side panel 10 and the front panel 30, respectively. The first corner post inner side panel 143 is connected to at least the first transition panel 145a. The composite material board 70 constituting the side panel 10 is connected to the first corner post inner side panel 144a through the fastener 60. The second corner post inner side panel 144b is connected to at least the second corner post transition panel 145b. The composite material board 70 constituting the front panel 30 is connected to the second corner post inner side panel 144b by the fastener 60. Alternatively, the corner post inner side panel 144 located on the inner side of the front end corner post 42 is constructed as an independent member to be simultaneously connected to the composite material boards 70 constituting the side panel 10 and the front panel 30.

As shown in Fig. 38, the rear end corner post 41 includes a corner post body 45 and a third corner post transition panel 145c. The third corner post transition panel 145c extends inwardly from the end of the corner post body 45 in the length direction of the container body frame 101. The corner post inner side panel 144 includes a third corner post inner side panel 144c located on the inner side of the rear end corner post 41. The third corner post inner side panel 144c is connected to at least the third corner post transition panel 145c. The composite material board 70 constituting the side panel 10 is connected to the third corner post inner side panel 144c through the fastener 60.

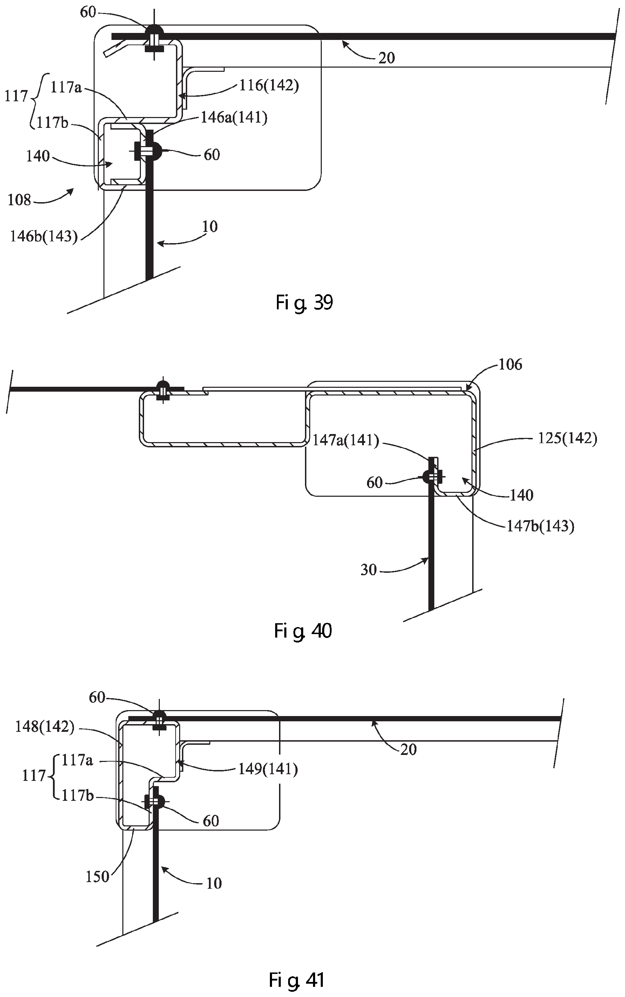

As shown in Fig. 39, the inner side panel 141 includes a side rail inner panel 146a located on the inner side of the top side rail 108. The top side rail 108 includes a side rail body 116 as the outer side panel 142 and a side rail transition panel 146b as the transition panel 143. The side rail transition panel 146b extends inwardly from the lower end of the side rail body 116. The side rail inner panel 146a is connected to at least the side rail transition panel 146b. The composite material board 70 constituting the side panel 10 is connected to the side rail inner panel 146a through the fastener 60. The side rail body 116 is configured to be bent outwardly in multiple sections to form a recessed platform 117, which includes a first section 117a disposed horizontally and a second section 117b disposed vertically. The side rail transition panel 146b extends inwardly from the second section 117b, and the side rail inner panel 146a is located between the first section 117a and the side rail transition panel 146b and is connected to both of them.

As shown in Fig. 40, the inner side panel 141 includes an end header inner side panel 147a located on the inner side of the front end header 106. The front end header 106 includes a end header body 125 as the outer side panel 142 and a end header transition panel 147b as the transition panel 143. The end header transition panel 147b extends inwardly from the lower end of the end header body 125. The end header inner side panel 147a is connected to at least the end header transition panel 147b. Fig. 40 shows that one end of the end header inner side panel 147a is connected to the end header transition panel 147b, and the other end thereof is a free end. The composite material board 70 constituting the front panel 30 is connected to the end header inner side panel 147a through the fastener 60.

As shown in Fig. 41, the top side rail 108 and/or the front end header 106 may be formed of a special-shaped square tube which includes an outer tube wall 148 as the outer side panel 142, an inner tube wall 149 as the inner side panel 141, and a bottom tube wall 150 as the transition panel 143. The inner tube wall 149 is configured to be bent outward in multiple sections to form a recessed platform 117, which includes a first section 117a disposed horizontally and a second section 117b disposed vertically and connected to the bottom tube wall 150. The composite material board 70 constituting the side panel 10 and/or the front panel 30 is connected to the second section 117b through the fastener 60.

The fastener 60 is disposed on the inner side panel 141 of the container body frame 101, such that the outer end of the fastener 60 can be hidden in the concave cavity 140 formed by the inner side panel 141, the outer side panel 142 and the transition panel 143. In this way, water outside the container body can be further prevented from entering the container body through the fastener 60 at the container body frame 101, effectively reducing the risk of water entering the container body and improving the sealing and waterproof performance of the container body. Moreover, the fastener 60 shielded by the outer side panel 142 cannot be observed from the outside of the container 100, which can improve the overall aesthetics of the product.

### Second embodiment

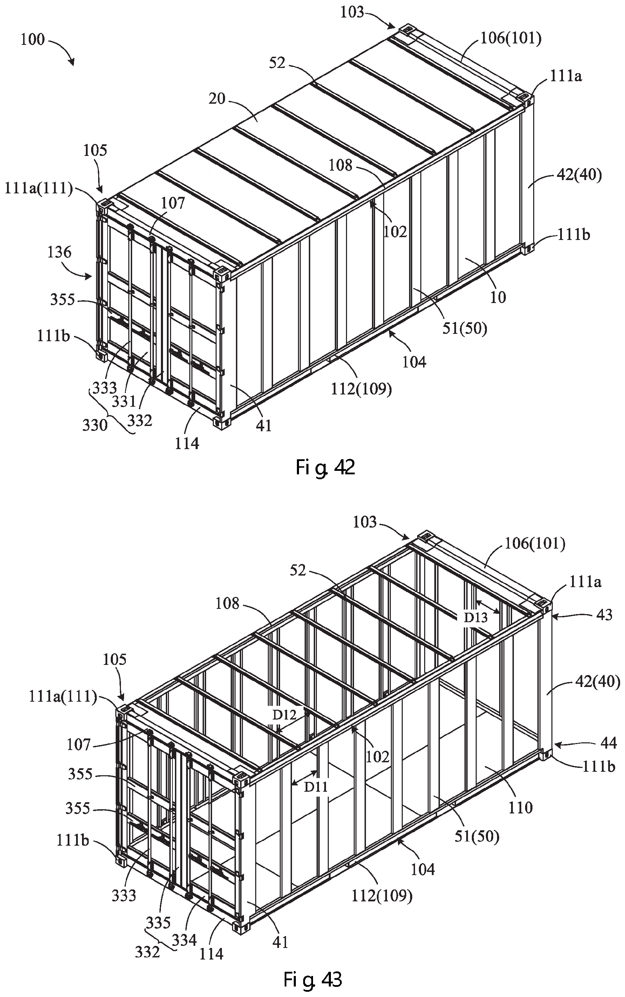

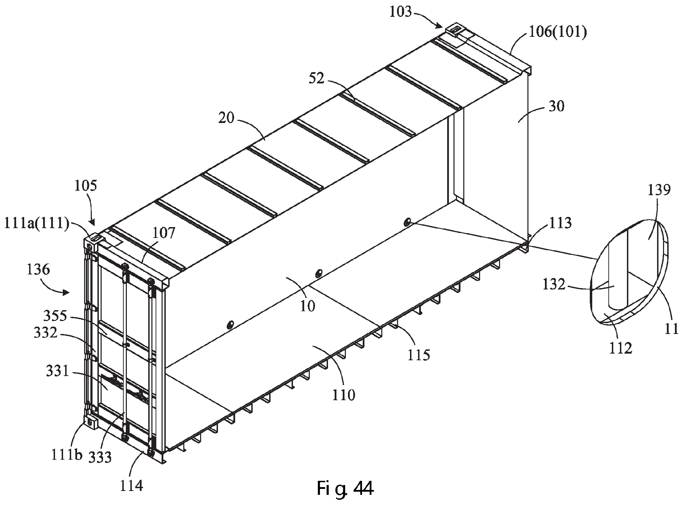

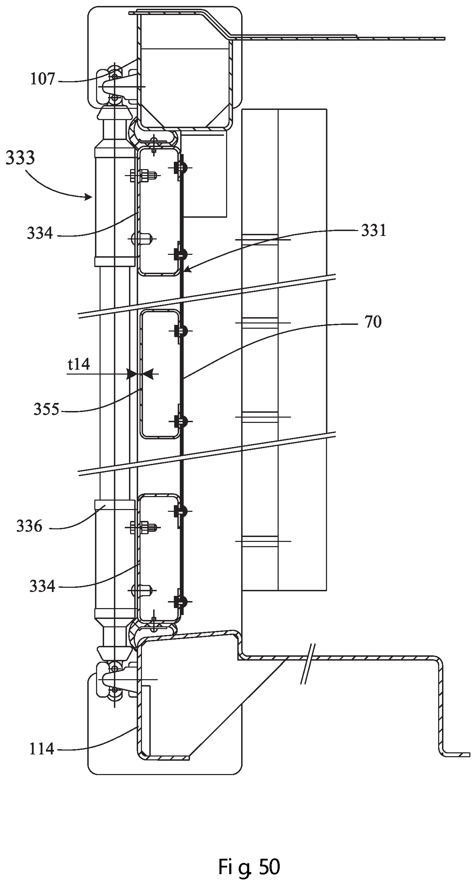

Hereinafter, a container 300 of the second embodiment will be described with reference to Figs. 42 to 51. The container 300 in the second embodiment has the same structure and/or configuration as the container 100 in the first embodiment, except for the container door and the top structure. Therefore, elements having substantially the same functions as those in the first embodiment will be numbered the same here, and will not be described and/or illustrated in detail for the sake of brevity.

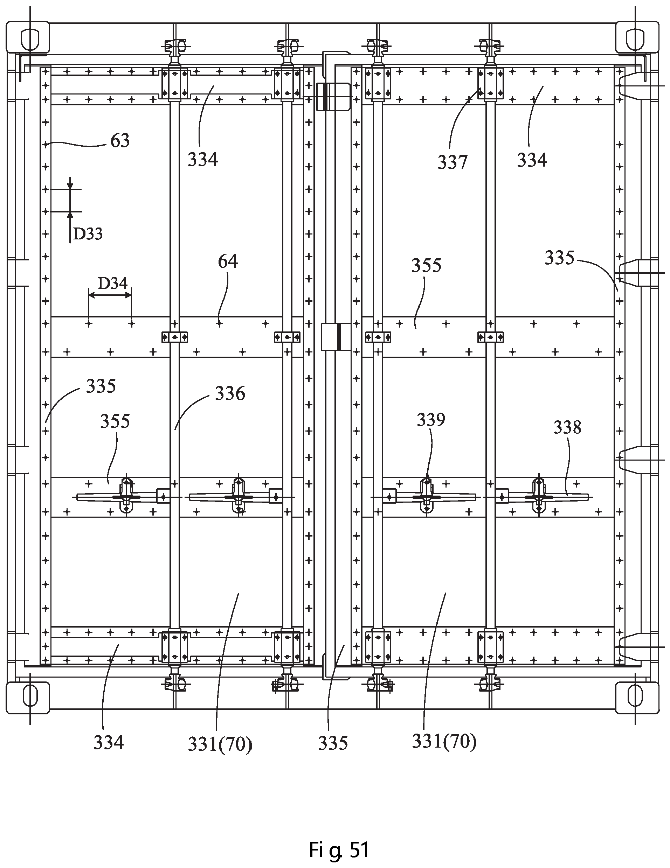

In this embodiment, the door panel 331 used in the container door 136 is also constituted by the composite material board. Specifically, as shown in Figs. 42 to 44 and 50, the container door 136 includes a door panel assembly 330 and a corresponding portion of the container body frame 101 connected to the door panel assembly 330. The door panel assembly 330 includes a door panel 331 and a door frame 332. The door frame 332 is disposed on one side of the door panel 331 in the thickness direction and is connected to the door panel 331 for supporting the door panel 331. The door panel assembly 330 is disposed at the rear end of the container 300, whereupon the rear end may also be referred to as the door end, whereupon the container is an end-opening container. Alternatively, the door panel assembly 330 is disposed on the side of the container 300, whereupon the container is a side-opening container. Exemplarily, the container 300 may be provided with two door panel assemblies 330, which constitute a double-opening door structure. Of course, if necessary and/or desired, the container may be provided with one door panel assembly 330, and the one door panel assembly 330 constitutes a single-opening door structure. The door frame 332 includes a door crossbeam 334 respectively located at the top and bottom ends of a single door panel 331, and a door vertical beam 335 located at both ends of the single door panel 331 in the width direction of the door panel assembly 330. The door crossbeam 334 extends between the two door vertical beams 335, and both ends of the door crossbeam 334 are connected to the door vertical beam 335 (see Fig. 51). The door frame 332 is made of steel material to ensure the overall structural strength of the door panel assembly 330. The door vertical beam 335 is rotatably connected to the corner post of the container through a hinge.

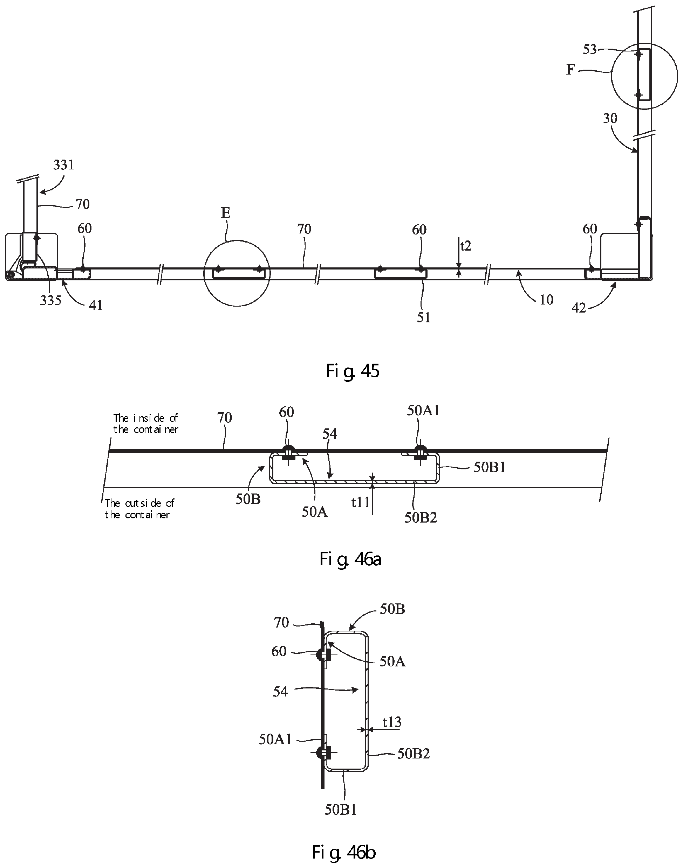

Referring to Figs. 45 to 49, exemplarily, the concealed design is applied to the fasteners at all reinforcing ribs and the fasteners at all container body frames in this embodiment, thereby improving the sealing and waterproof performance of the container. The hidden design has been described in the first embodiment and will not be repeated for the sake of brevity.

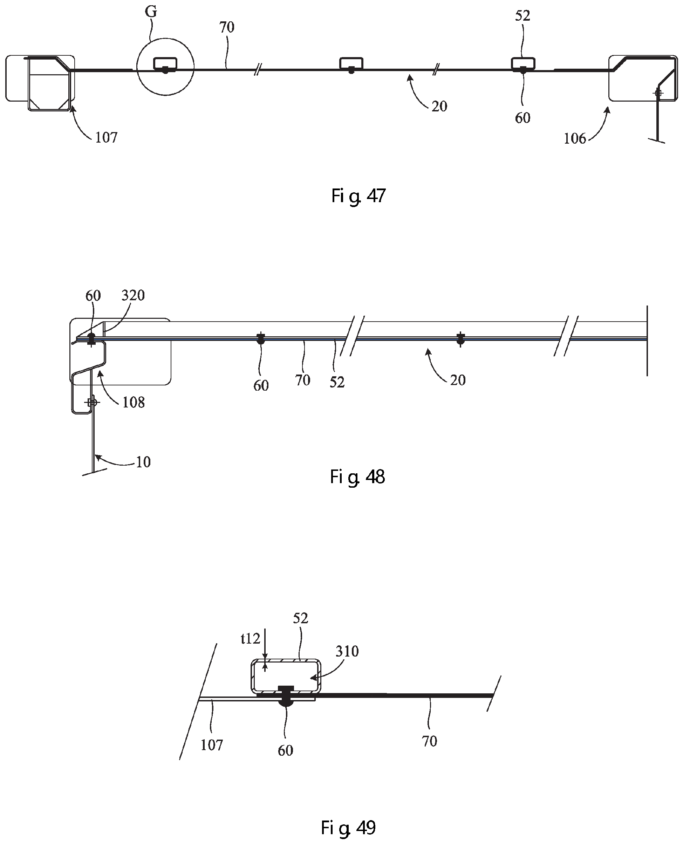

The top structure in this embodiment is different from that of the first embodiment, and specifically, the top panel reinforcing rib 52 is disposed on the outside of the composite material board 70 constituting the top panel 20. Therefore, the reinforcing rib 50 is separated from the composite material board 70 constituting the top panel 20 inside the container 300, and the reinforcing rib 50 will not be exposed to the inside of the container 300. The inner surface of the top panel 20 constituted by the composite material board 70 is flat. The composite material board 70 constituting the top panel 20 may be in direct contact with the goods in the container to fully utilize the wear resistance of the composite material. In order to better prevent water from entering the container from the installation position of the top panel reinforcing rib 52, the top panel reinforcing rib 52 adopts a closed structure. Specifically, the cross-section of the top panel reinforcing rib 52 has a closed ring shape to form a cavity 310, and closing members 320 are provided at both ends of the top panel reinforcing rib 52 (see Fig. 48). The fastener 60 is hidden in the cavity 310 of the top panel reinforcing rib 52.

Optionally, as shown in Fig. 47, the top panel reinforcing rib 52 is provided at the end of the front end header 106 and is connected to both the composite material board 70 constituting the top panel 20 and the end of the front end header 106 through the fastener 60. The top panel reinforcing rib 52 is provided at the end of the rear end header 107, and the top panel reinforcing rib 52 is connected to both the composite material board 70 constituting the top panel 20 and the end of the rear end header 107 through the fastener 60. With such a configuration, the top panel reinforcing rib 52 can improve the connection strength between the front end header 106 and the rear end header 107 and the top panel 20, thereby improving the structural strength. As shown in Fig. 48, the two ends of the top panel reinforcing rib 52 may extend to the top side rails 108 located on both sides of the container body frame 101, respectively. The top panel reinforcing rib 52 is connected to the top panel 20 and the top side rail 108 through the fastener 60. With such arrangement, the top panel reinforcing rib 52 can improve the connection strength between the top side rail 108 and the top panel 20, resulting in better structural strength.

The door panel 331 is constituted by the composite material board 70. Specifically, a single door panel 331 is constituted by at least one of the composite material boards 70. Optionally, a single door panel 331 is constituted by one composite material board 70. The composite material board 70 has an inner surface facing the interior of the container and an outer surface opposite to the inner surface. The door frame 332 is connected to the outer surface of the composite material board 70, for example, by fasteners 60 such as screws and/or structural adhesive. The reinforcing rib 50 also includes at least one door panel reinforcing rib 355, which is connected to the outer surface of the composite material board 70, for example, by fasteners 60 such as screws and/or structural adhesive.

The door panel assembly 330 further includes a door lock mechanism 333, which includes a lock rod 336, a lock rod bracket 337, a handle 338, and a handle seat 339. The lock rod 336 is disposed vertically, and a mounting position for mounting and fixing the lock rod bracket 337 is provided on the door panel reinforcing rib 355 and/or the door frame 332. The lock rod 336 is mounted to the door frame 332 and/or the door panel reinforcing rib 355 through the lock rod brackets 337 at different positions. For example, the lock rod bracket 337 may be connected to the door frame 332 and/or the door panel reinforcing rib 355 respectively by welding or fasteners 60 such as screws. An optional example is that the end of the handle 338 is pivotally connected to the lock rod 336, and the handle seat 339 may be fixed to the door panel reinforcing rib 355 by welding or fasteners 60 such as screws. The handle 338 may be rotatably and separately locked onto the handle seat 339.

The door panel reinforcing rib 355 is disposed in the width direction of the door panel assembly 330. Both ends of the door panel reinforcing rib 355 are connected or abutted with the door vertical beam 335. On the one hand, the strength of the composite material board 70 may be strengthened, and on the other hand, it is convenient to fix the lock rod 336 and the handle seat 339 on the door panel reinforcing rib 355. In other words, the door panel reinforcing rib 355 can improve the structural strength of the door panel while providing a fixing position for the lock rod 336 and the handle seat 339. Moreover, the door panel reinforcing rib 355 is disposed in the width direction of the door panel assembly 330, and the lock rod 336 is vertically disposed and installed on the door panel reinforcing rib 355, which improves the anti-deformation ability of the middle position of the door panel 331 in the horizontal and vertical directions.

The thickness t14 of the plate material used to make the door panel reinforcing rib 355 is 2.5 mm to 4 mm, for example, the thickness t14 may be 2.5 mm, 2.6 mm, 2.8 mm, 3 mm, 3.2 mm, 3.4 mm, 3.6 mm, 3.8 mm, 4 mm, or other suitable values. The plate material of the door panel reinforcing rib 355 is preferably a high-strength steel with a yield strength of 345 MPa or more.

As shown in Fig. 51, the fastener 60 further includes a third fastener 63 and a fourth fastener 64. It should be noted that, as described above, the fasteners 60 on the door frame 132 and the door panel reinforcing rib 355 are shielded by the protruding portion 50B. Fig. 51 schematically shows the outer transmission position of the third fastener 63 and the fourth fastener 64. The door frame 132 is connected to the composite material board 70 through the third fastener 63, and the door panel reinforcing rib 355 is connected to the composite material board 70 through the fourth fastener 64. Two adjacent third fasteners 63 have a spacing D33, and two adjacent fourth fasteners 64 have a spacing D34. The connection between the composite material board 70 and the door frame 132 needs to be firmer and more reliable, so the third fastener 63 is more densely disposed relative to the fourth fastener 64, whereupon D34 > D33. If necessary and/or desired, it may also be set to D34 ≤ D33. Optionally, the spacing D33 is 50 mm to 120 mm, for example, the spacing D33 may be 0 mm, 55 mm, 60 mm, 65 mm, 70 mm, 75 mm, 80 mm, 85 mm, 90 mm, 100 mm, 110 mm, 120 mm, or other suitable values. The spacing D34 is 80 mm to 170 mm, for example, the spacing D34 may be 80 mm, 100 mm, 110 mm, 120 mm, 130 mm, 140 mm, 150 mm, 160 mm, 170 mm, or other suitable values. The spacing of the fasteners 60 are set within the above range, which can ensure reliable connection between the composite material board 70 and the door frame 132 and the door panel reinforcing rib 355, and resist deformation of the composite material board 70.

The present application can achieve at least the following beneficial effects:

The present application uses composite material boards instead of thin corrugated steel plates. Composite material boards are characterized by being welding-free and painting-free, which can significantly reduce the welding and painting workload during the production of the container, lower VOCs and solid waste emissions, and have notable environmental benefits.

Since the density of composite materials is much lower than that of steel, the composite material container of the present invention can theoretically reduce the container weight by more than 6% and carbon emissions by more than 13% compared with steel containers of the same type. At the same time, due to the excellent wear resistance, corrosion resistance and impact resistance of composite materials, the maintenance costs throughout the container's life cycle can be effectively reduced.

The inner surface of the container in the present application is flat, which is conducive to cargo loading and enhances the biosafety level of the container.

Unless otherwise defined, the technical and scientific terms used herein have the same meanings as commonly understood by those skilled in the technical field of the present application. The terms used herein are only for describing specific implementation purposes, and are not intended to limit the present application. A feature described in one embodiment herein can be applied to another embodiment alone or in combination with other features, unless the feature is not applicable in the other embodiment or otherwise stated.

The present application has been described through the above-mentioned embodiments, but it should be understood that the above-mentioned embodiments are only for the purpose of illustration and description, and are not intended to limit the present application to the described embodiments. Furthermore, more variations and modifications can be made according to the teachings of the present application, and these variations and modifications fall within the scope claimed by the present application.

## Claims

1. A composite container, comprising:
a side panel;
a top panel;
a front panel;
a container body frame made of steel material; and
at least one reinforcing rib;
wherein at least a portion of the side panel, the top panel, and the front panel is constituted by at least one composite material board connected to the container body frame; and
the reinforcing rib comprises:
at least one connecting portion connected to the composite material board; and
a protruding portion extending from the connecting portion in a direction away from the composite material board.

2. The composite container of claim 1, wherein the protruding portion comprises a first protruding portion and a second protruding portion, the first protruding portion is connected to the connecting portion, and the second protruding portion is connected to the first protruding portion and is spaced apart from the connecting portion in a thickness direction of the reinforcing rib.

3. The composite container of claim 2, wherein the first protruding portion is inclined or perpendicular to the connecting portion.

4. The composite container of claim 2, wherein the cross-sectional shape of the reinforcing rib is rectangular, U-shaped, H-shaped or Z-shaped.

5. The composite container of claim 1, wherein the reinforcing rib comprises two of the connecting portions spaced apart in a width direction of the reinforcing rib.

6. The composite container of claim 5, wherein the cross-sectional shape of the reinforcing rib is Ω-shaped, wherein two legs of the Ω-shaped reinforcing rib serve as the two connecting portions.

7. The composite container of claim 1, wherein at least one of the side panel, the top panel and the front panel comprises at least two jointed composite material boards, and the connecting portion is connected to two adjacent composite material boards and at least partially covers a seam between the two adjacent composite material boards.

8. The composite container of claim 1, wherein the cross-sectional shape of the reinforcing rib is L-shaped.

9. The composite container of any one of claims 1 to 8, wherein the protruding portion and the connecting portion are integrally formed.

10. The composite container of any one of claims 1 to 8, wherein the container body frame comprises:
a corner post comprising a pair of front end corner posts located at the front end of the container body frame and a pair of rear end corner posts located at the rear end of the container body frame;
a front end header connected to upper ends of the pair of front end corner posts respectively;
a pair of top side rails respectively connected to upper ends of the front end corner posts and the rear end corner posts located on the same side;
an underframe connected to lower ends of the pair of front end corner posts and the pair of rear end corner posts respectively;
wherein the reinforcing rib comprises a top panel reinforcing rib extending in a transverse direction between the pair of top side rails, a side panel reinforcing rib extending in a vertical direction between the top side rails and the underframe, and a front panel reinforcing rib extending in a vertical direction between the front end header and the underframe.

11. The composite container of claim 10, wherein:
the composite material board constituting the front panel is located on the inner side of the container body frame; and/or
the composite material board constituting the side panel is located on the inner side of the container body frame; and/or
the composite material board constituting the top panel is located on the outer side the container body frame.

12. The composite container of claim 10, wherein:
the front panel reinforcing rib is located on the outer side of the composite material board constituting the front panel; and/or
the side panel reinforcing rib is located on the outer side of the composite material board constituting the side panel; and/or
the top panel reinforcing rib is located on the inner side of the composite material board constituting the top panel.

13. A composite container, comprising:
a container body frame made of steel material;
a side panel disposed on both sides of the container body frame;
a top panel disposed at the top end of the container body frame;
a front panel disposed at the front end of the container body frame; and
at least one reinforcing rib;
wherein at least a portion of the side panel, the top panel and/or the front panel is constituted by at least one composite material board;
the reinforcing rib is connected to the composite material board to reinforce the strength of the side panel, the top panel and/or the front panel constituted by the composite material board;
wherein at least one of the composite material boards is directly connected to the container body frame.

14. The composite container of claim 13, wherein at least one of the side panel, the top panel and the front panel comprises at least two jointed composite material boards, the container comprises a fastener, two adjacent composite material boards are connected by the reinforcing ribs, and the two adjacent composite material boards are lapped with each other and lapping potions are connected by the fastener or structural adhesives.

15. The composite container of claim 13, wherein at least one of the side panel, the top panel and the front panel comprises at least two jointed composite material boards, two adjacent composite material boards are coplanar with each other and the reinforcing ribs have a connecting portion attached in surface contact with the two adjacent composite material boards, and the connecting portion is connected to the two adjacent composite material boards and covers a seam between the two adjacent composite material boards.

16. The composite container of claim 13, wherein a single composite material board is independently provided with at least one of the reinforcing ribs.

17. The composite container of claim 13, wherein:
the reinforcing rib comprises a side panel reinforcing rib extending in a vertical direction, and a spacing between two adjacent side panel reinforcing ribs is 300 mm to 600 mm; and/or
the reinforcing rib comprises a top panel reinforcing rib extending in a transverse direction, and a spacing between two adjacent top panel reinforcing ribs is 500 mm to 800 mm; and/or
the reinforcing rib comprises a front panel reinforcing rib extending in a vertical direction, and a spacing between two adjacent front panel reinforcing ribs is 300 mm to 600 mm.

18. The composite container of claim 13, wherein the container body frame comprises a top side rail and a bottom side rail, the top side rail and the bottom side rail each comprise a side rail body and a recessed platform bent outward from the side rail body in multiple sections, the recessed platform comprises a first section disposed horizontally, a second section disposed vertically, and a third section disposed horizontally, wherein the second section is connected to the side panel, the first section and the third section are respectively disposed at the upper and lower ends and the inner and outer sides of the second section, a space for installing the reinforcing rib is formed between the third section of the top side rail and the third section of the bottom side rail, and the overall thickness of the reinforcing rib is less than the width of the third section.

19. The composite container of claim 13, wherein the side panel, the top panel and/or the front panel are all constituted by the composite material boards.

20. The composite container of claim 13, wherein the top panel comprises the composite material board and a metal plate connected to the composite material board through the reinforcing rib or bonded to the composite material board.

21. The composite container of claim 13, wherein a seal is provided between the composite material board and the container body frame and/or between the composite material board and the reinforcing rib.

22. The composite container of claim 21, wherein:
the container comprises a fastener, the composite material board is connected to the container body frame and/or the reinforcing rib via the fastener, and the seal is disposed around the fastener; and/or,
the seal is disposed between mating surfaces of the composite material board and the container body frame; and/or,
the seal is disposed between mating surfaces of the composite material board and the reinforcing rib; and/or,
when adjacent composite material boards are provided and the two adjacent composite material boards lap, the seal is disposed between mating surfaces of the two adjacent composite material boards at the lap.

23. The composite container of claim 13, wherein the container comprises a fastener, the composite material board constituting the top panel is connected to the top end of the container body frame through the fastener, the top end of the container body frame has a top upper surface, a top side surface and a top lower surface, the top side surface is located on the inner side of both the top upper surface and the top lower surface toward the center of the top panel, and the fastener is disposed on the top upper surface.

24. The composite container of claim 13, wherein the container comprises a fastener, the composite material board is connected to the container body frame and/or the reinforcing rib through the fastener, the fastener is a rivet, comprising:
a rivet sleeve provided with a tip structure at an outer peripheral surface;
the rivet sleeve configured such that when an inner peripheral surface of the rivet sleeve is subjected to a force acting outward in a radial direction of the rivet, the rivet sleeve can at least partially expand and deform in the radial direction to allow the tip structure to be at least partially embedded in the composite material board.

25. The composite container of claim 24, wherein the rivet comprises a cap body connected to a first end of the rivet sleeve, an outer peripheral portion of the cap body protrudes radially outward from the rivet sleeve, and the outer peripheral portion of the cap body abuts against the container body frame and/or the reinforcing rib.

26. The composite container of claim 24, wherein the rivet comprises a mandrel and an expansion head, the mandrel is inserted into the rivet sleeve, the expansion head is connected to one end of the mandrel, and the radial dimension of the expansion head is greater than an inner diameter of the rivet sleeve when it is not deformed,
wherein the rivet is configured such that the mandrel can slide relative to the rivet sleeve along an axial direction of the rivet when the rivet is not riveted, and the expansion head protrudes from a second end of the rivet sleeve when the rivet is not riveted and is embedded in the interior of the rivet sleeve along with the sliding of the mandrel when the rivet is riveted.

27. The composite container of claim 26, wherein the mandrel comprises an embedded portion and a detachment portion, one end of the embedded portion is connected to the expansion head, and the detachment portion is connected to the other end of the embedded portion,
wherein the rivet is configured such that the embedded portion is hidden inside the rivet sleeve when the rivet is riveted, and the detachment portion protrudes from the first end of the rivet sleeve when the rivet is not riveted and is detached from the embedded portion by external force when the rivet is riveted.

28. The composite container of claim 24, wherein the tip structure is configured as a triangular thread.

29. The composite container of claim 13, wherein the reinforcing rib comprises a connecting portion and a protruding portion, the connecting portion is attached in surface contact with and connected to the composite material board, and the protruding portion is connected to the connecting portion and extends in a direction away from the composite material board.

30. The composite container of claim 29, wherein the composite container comprises a fastener, the inner side of the protruding portion forms a recessed structure, the connecting portion comprises a first connecting portion disposed in the recessed structure, and the fastener connects the composite material board and the first connecting portion so that the outer end of the fastener is hidden in the recessed structure.

31. The composite container of claim 30, wherein the connecting portion further comprises a second connecting portion disposed outside the recessed structure, connected to the first connecting portion and bonded to the composite material board by structural adhesive or sealant.

32. The composite container of claim 29, wherein the protruding portion is connected to at least one end of the connecting portion in a width direction of the reinforcing rib, and/or the connecting portion is connected to at least one end of the protruding portion in the width direction of the reinforcing rib.

33. The composite container of claim 29, wherein the protruding portion comprises a first protruding portion connected to the connecting portion and a second protruding portion parallel to and spaced apart from the connecting portion, and at least one end of the second protruding portion in a width direction of the reinforcing rib is connected to the connecting portion via the first protruding portion.

34. The composite container of claim 13, wherein:
the side panel is located on the inner side of the container body frame, the reinforcing rib comprises a side panel reinforcing rib extending in a vertical direction and disposed on the outer side of the composite material board constituting the side panel; and/or
the top panel is located on the outer side of the container body frame, the reinforcing rib comprises a top panel reinforcing rib extending in a transverse direction and disposed on the inner side of the composite material board constituting the top panel; and/or
the front panel is located on the inner side of the container body frame, the reinforcing rib comprises a front panel reinforcing rib extending in a vertical direction and disposed on the outer side of the composite material board constituting the front panel.

35. The composite container of claim 13, wherein:
the reinforcing rib comprises a side panel reinforcing rib extending in a vertical direction, and the thickness of the plate material used to make the side panel reinforcing rib is 2.5 mm to 4 mm; and/or
the reinforcing rib comprises a top panel reinforcing rib extending in a transverse direction, and the thickness of the plate material used to make the top panel reinforcing rib is 2 mm to 3 mm; and/or
the reinforcing rib comprises a front panel reinforcing rib extending in a vertical direction, and the thickness of the plate material used to make the front panel reinforcing ribs is 2.5 mm to 4 mm.

36. The composite container of any one of claims 13 to 35, wherein the container comprises a first fastener, the composite material board is connected to the container body frame through the first fastener, and the spacing between two adjacent first fasteners is 80 mm to 180 mm.

37. The composite container of any one of claims 13 to 35, wherein the container comprises a second fastener, the composite material board constituting the front panel and/or the side panel is connected to the reinforcing rib through the second fastener, and the spacing between two adjacent second fasteners is 120 mm to 300 mm.

38. The composite container of any one of claims 13 to 35, wherein the thickness of the composite material board is 2.5 mm to 4 mm.

39. The composite container of any one of claims 13 to 35, wherein the container further comprises a bottom panel and an underframe, the underframe comprises two bottom side rails disposed opposite to each other, the bottom panel comprises a plurality of bottom panel units, both ends of the bottom panel unit in a width direction of the container are lapped on the two bottom side rails, and the plurality of bottom panel units are laid in a length direction of the container.

40. The composite container of claim 39, wherein the underframe comprises a bottom crossbeam and a wide bottom crossbeam, each connected to the two bottom side rails, the width of the wide bottom crossbeam is greater than that of the bottom crossbeam, the bottom panel unit is independently connected to the bottom crossbeam, and two adjacent bottom panel units are connected to the same wide bottom crossbeam.

41. The composite container of any one of claims 13 to 35, wherein the container body frame comprises a front end corner post, a top corner piece and a bottom corner piece, a reinforcing member extending in a vertical direction is provided on the inner side of the front end corner post, and both ends of the reinforcing member are respectively connected to the top corner piece and the bottom corner piece.

42. The composite container of claim 41, wherein the thickness of plate material used to make the reinforcing member is 2.5 mm to 4 mm.

43. The composite container of any one of claims 13 to 35, wherein composite material of the composite material board mainly comprises glass fiber and resin, the mass percentage of the glass fiber is 60% to 70%, and the mass percentage of the resin is 30% to 35%.

44. The composite container of claim 29, wherein the composite container further comprises at least one fixing member for auxiliary fixation, a recessed structure is formed on the inner side of the protruding portion, the fixing member is disposed in the recessed structure, and a clearance hole is disposed on the side panel at a position corresponding to the fixing member, and the clearance hole is used for an external component to pass through and connect with the fixing member.

45. The composite container of claim 44, wherein the composite container comprises a fixing assembly disposed corresponding to each of the fixing members, the fixing member is disposed at the bottom of the reinforcing rib, the container body frame comprises a bottom side rail, the fixing assembly comprises a cover plate and two sealing plates disposed on both sides of the fixing member, one end of the fixing member is fixedly connected to the bottom side rail and the other end is fixedly connected to the cover plate, and the cover plate, the two sealing plates and the inner wall of the protruding portion form a space for guiding the external component to pass through the fixing member.

46. The composite container of any one of claims 13 to 35, wherein the member constituting the container body frame comprises an inner side panel, an outer side panel, and a transition panel connected between the inner side panel and the outer side panel, the outer side panel is located on the outer side of the inner side panel facing away from the center of the container body frame and shields the inner side panel, a concave cavity is formed on the inner sides of the outer side panel, the inner side panel and the transition panel, and the inner side panel is connected to the composite material board by a fastener so that the outer end of the fastener is hidden in the concave cavity.

47. The composite container of claim 46, wherein the container body frame comprises a front end header, a rear end header, four corner posts and two top side rails, and at least one of the front end header, the rear end header, the corner posts and the top side rails is the member constituting the container body frame.

48. The composite container of any one of claims 13 to 35, wherein the container comprises a door panel assembly disposed on the rear end of the container or the side panel in an openable and closable manner, the door panel assembly comprises a door panel and a door frame, the door panel is connected to the door frame, at least a portion of the door panel is constituted by at least one composite material board, the reinforcing rib comprises a door panel reinforcing rib, and the door panel reinforcing rib is connected to an outer surface of the composite material board constituting the door panel.

49. The composite container of claim 48, wherein the door frame is connected to an outer surface of the composite material board constituting the door panel.

50. The composite container of claim 48, wherein the door panel reinforcing rib is disposed in the width direction of the door panel assembly, and/or two ends of the door panel reinforcing rib are connected to or abutted against the door frame.

51. The composite container of claim 48, wherein the composite material board constituting the door panel is connected to the door frame and/or the door panel reinforcing rib through a fastener, and a seal is provided around the fastener.

52. The composite container of claim 48, wherein a seal is provided between mating surfaces of the composite material board and the door frame; and/or a seal is provided between mating surfaces of the composite material board and the door panel reinforcing rib.

53. The composite container of claim 48, wherein the door panel assembly further comprises a door lock mechanism comprising a lock rod and a lock rod bracket, the lock rod is vertically disposed, a mounting position for mounting and fixing the lock rod bracket is provided on the door panel reinforcing rib and/or the door frame, and the lock rod is installed to the door frame and/or the door panel reinforcing rib through the lock rod bracket.

54. The composite container of any one of claims 13 to 33 and 35, wherein the reinforcing rib comprises a top panel reinforcing rib extending in a transverse direction and disposed on the outer side of the composite material board constituting the top panel.

55. The composite container of claim 54, wherein the cross-section of the top panel reinforcing rib has a closed annular shape to form a cavity, and a closing member is provided at both ends of the top panel reinforcing rib.

56. The composite container of claim 55, wherein the top panel reinforcing rib is connected to the composite material board constituting the top panel through a fastener, and the fastener is hidden in a cavity of the top panel reinforcing rib.

57. The composite container of claim 54, wherein:
the container body frame comprises a front end header, the top panel reinforcing rib is provided at an end of the front end header and is connected to both the composite material board constituting the top panel and the end of the front end header through a fastener; and/or
the container body frame comprises a rear end header, the top panel reinforcing rib is provided at an end of the rear end header and is connected to both the composite material board constituting the top panel and the end of the rear end header through a fastener; and/or
the container body frame comprises a top side rail, and the top panel reinforcing rib is connected to the composite material board constituting the top panel and the top side rail through a fastener.
